# EUROPEAN PATENT SPECIFICATION

(11) **EP 3 911 019 B1**
(45) Date of publication and mention of the grant of the patent: **20.12.2023**
(21) Application number: 20747788.6
(22) Date of filing: 02.01.2020
(51) Int. Cl.: H04W 76/11, H04W 40/22

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 02.02.2019 CN 201910106285
(43) Date of publication of application: 17.11.2021
(73) Proprietor: Huawei Technologies Co., Ltd., Longgang District Shenzhen, Guangdong 518129 (CN)
(72) Inventor: LUO, Haiyan, Shenzhen, Guangdong 518129 (CN); DAI, Mingzeng, Shenzhen, Guangdong 518129 (CN)
(74) Representative: Gill Jennings & Every LLP
(86) International application number: PCT/CN2020/070097
(87) International publication number: WO 2020/156020

(56) References cited:
- WO-A1-2018/164469
- WO-A1-2018/212845
- WO-A2-2018/236867
- WO-A2-2018/236867
- CN-A- 108 632 815
- SAMSUNG: "Executing duplication for RRC-container", 3GPP DRAFT; 38473_CR0078_(REL-15)_R3-184262, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Montreal, Canada; 20180702 - 20180706 6 September 2018 (2018-09-06), XP051477165, Retrieved from the Internet: URL:http://www.3gpp.org/ftp/3guInternal/3G PP%5FUltimate%5FCRPacks [retrieved on 2018-09-06]
- KDDI CORPORATION: "Text Proposal for FFS Resolution", 3GPP TSG-RAN WG2 #104 R2-1818741, 16 November 2018 (2018-11-16), XP051495008, DOI: 20200306161758
- SAMSUNG: "Executing Duplication for RRC-container", 3GPP TSG-RAN WG3 NR AdHoc 1807 R3-184262, 6 July 2018 (2018-07-06), XP051477165, DOI: 20200306162026A

## Description

### TECHNICAL FIELD

This application relates to the field of communication technologies, and in particular, to a communication method and apparatus.

### BACKGROUND

In a CU-DU architecture, functions of a base station are split, where a part of the functions of the base station is deployed on a centralized unit (centralized unit, CU), and the other part of the functions is deployed on a distributed unit (distributed unit, DU). In a possible deployment manner, the base station is split into the CU and the DU based on a protocol stack. For example, a radio resource control (Radio Resource Control, RRC) layer, a service data adaptation protocol (Service Data Adaptation Protocol, SDAP) layer, and a packet data convergence protocol (Packet Data Convergence Protocol, PDCP) layer are deployed on the CU. The remaining radio link control (Radio Link Control, RLC) layer, media access control (Media Access Control, MAC) layer, and physical layer (physical, PHY) are deployed on the DU.

In this case, when the base station is deployed by using the CU-DU architecture, how to implement a user equipment-to-network relay (UE-to-Network relay) communication process becomes a problem.

SAMSUNG: "Executing duplication for RRC-container", 3GPP DRAFT; 38473_CR0078_(REL-15)_R3-184262, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE; WO 2018/164469 and WO 2018/236867 all disclose communication apparatus and methods.

### SUMMARY

This application provides a communication method and apparatus, to implement a UE-to-network relay communication process based on a CU-DU architecture and is defined in the appended claims..

According to the method provided in this application, the CU determines the mapping relationship between the bearer identifier of the relay UE and the identifier of the logical channel between the relay UE and the remote UE, and sends the UE context modification request message to the DU to request the DU to modify the context of the relay UE, to facilitate subsequent regeneration of an RRC reconfiguration message of the relay UE, so that the relay UE can complete forwarding of an RRC message or a data packet for the remote UE based on the RRC reconfiguration message. In this way, a UE-to-network relay communication process is implemented in a CU-DU architecture.

Optionally, the UE context modification request message further carries a bearer identifier of the remote UE having a mapping relationship with the bearer identifier of the relay UE and the identifier of the logical channel, and the bearer identifier of the remote UE is an identifier of a bearer between the remote UE and the CU.

According to the optional manner, in a process of generating the UE context modification request message, the CU uses the mapping relationship among the bearer identifier of the relay UE, the bearer identifier of the remote UE, and the identifier of the logical channel between the relay UE and the remote UE, to facilitate generation of the RRC configuration information by the DU for the remote UE based on the bearer identifier of the remote UE and the mapping relationship between the identifier of the logical channel between the remote UE and the relay UE and the bearer identifier of the remote UE, after the DU receives the UE context modification request message.

Optionally, the method further includes: The CU sends a downlink RRC information transfer message to the DU, where the downlink RRC information transfer message includes downlink RRC information of the remote UE, an identifier of the relay UE on a CU-DU interface, and a first indication, the downlink RRC information includes a downlink RRC message of the remote UE and a PDCP layer and adaptation information that are encapsulated outside the downlink RRC message, the adaptation information is used to indicate that the downlink RRC message is the downlink RRC message of the remote UE, and the first indication is used to indicate that the adaptation information is encapsulated outside the downlink RRC message.

Based on the optional manner, when an adaptation layer is deployed in a protocol stack of the CU, a transmission process of the downlink RRC message of the remote UE can be implemented in the UE-to-network relay communication process.

Optionally, the method further includes: The CU receives an uplink RRC information transfer message sent by the DU, where the uplink RRC information transfer message includes uplink RRC information of the remote UE, an identifier of the relay UE on a CU-DU interface, and a first indication, the uplink RRC information includes an uplink RRC message of the remote UE and a PDCP layer and adaptation information that are encapsulated outside the uplink RRC message, the adaptation information is used to indicate that the uplink RRC message is the uplink RRC message of the remote UE, and the first indication is used to indicate that the adaptation information is encapsulated outside the uplink RRC message.

Based on the optional manner, when the adaptation layer is deployed in the protocol stack of the CU, a transmission process of the uplink RRC message of the remote UE can be implemented in the UE-to-network relay communication process.

Optionally, the method further includes: The CU sends a downlink general packet radio service tunneling protocol GTP-U frame to the DU, where the downlink GTP-U frame includes downlink data information of the remote UE, a first indication, and a tunnel endpoint identifier of a GTP-U tunnel of the relay UE, the downlink data information includes a downlink data packet of the remote UE and a PDCP layer and adaptation information that are encapsulated outside the downlink data packet, the adaptation information is used to indicate that the downlink data packet is the downlink data packet of the remote UE, and the first indication is used to indicate that the adaptation information is encapsulated outside the downlink data packet.

Based on the optional manner, when the adaptation layer is deployed in the protocol stack of the CU, a transmission process of the downlink data packet of the remote UE can be implemented in the UE-to-network relay communication process.

Optionally, the method further includes: The CU receives an uplink GTP-U frame sent by the DU, where the uplink GTP-U frame includes uplink data information of the remote UE, a first indication, and a tunnel endpoint identifier of a GTP-U tunnel of the relay UE, the uplink data information includes an uplink data packet of the remote UE and a PDCP layer and adaptation information that are encapsulated outside the uplink data packet, the adaptation information is used to indicate that the uplink data packet is the uplink data packet of the remote UE, and the first indication is used to indicate that the adaptation information is encapsulated outside the uplink data packet.

Based on the optional manner, when the adaptation layer is deployed in the protocol stack of the CU, a transmission process of the uplink data packet of the remote UE can be implemented in the UE-to-network relay communication process.

Optionally, the method further includes: The CU sends a UE context setup request message to the DU, where the UE context setup request message includes an identifier of the relay UE, the identifier of the remote UE, and a mapping relationship between the bearer identifier of the remote UE and the logical channel, and the UE context setup request message is used to request DU to set up a context of the remote UE.

Based on the optional manner, when the adaptation layer is deployed in a protocol stack of the DU, a process of setting up the context of the remote UE can be implemented in the UE-to-network relay communication process.

Optionally, the UE context modification request message further carries a second indication, the second indication is used to indicate the DU to add, when sending downlink data information or downlink RRC information of the remote UE, adaptation information to the downlink data information or the downlink RRC information, and the adaptation information is used to indicate that the downlink data information or the downlink RRC information is the downlink data information or the downlink RRC information of the remote UE.

Optionally, before that a CU generates a UE context modification request message, the method further includes: The CU receives, from the DU, an RRC connection setup request message, an RRC re-establishment request message, or an RRC resume request message that is of the remote UE and that is forwarded by the relay UE.

According to the method provided in this application, the DU may determine the mapping relationship between the bearer identifier of the relay UE and the identifier of the logical channel between the relay UE and the remote UE based on the UE context modification request message sent by the CU, and regenerate RRC configuration information of the relay UE, to facilitate subsequent generation of an RRC reconfiguration message of the relay UE by the CU based on the RRC configuration information of the relay UE, so that the relay UE can complete forwarding of an RRC message or a data packet for the remote UE based on the RRC reconfiguration message. In this way, a UE-to-network relay communication process is implemented in a CU-DU architecture.

Optionally, the UE context modification request message further carries a bearer identifier of the remote UE having a mapping relationship with the bearer identifier of the relay UE and the identifier of the logical channel, and the bearer identifier of the remote UE is an identifier of a bearer between the remote UE and the CU; and a mapping relationship between the bearer identifier of the relay UE and the identifier of the logical channel is specifically the mapping relationship among the bearer identifier of the relay UE, the identifier of the logical channel, and the bearer identifier of the remote UE.

According to the optional manner, the DU may determine the mapping relationship among the bearer identifier of the relay UE, the bearer identifier of the remote UE, and the identifier of the logical channel between the relay UE and the remote UE based on the UE context modification request message sent by the CU, to facilitate subsequent generation of the RRC configuration information for the remote UE based on the bearer identifier of the remote UE and the mapping relationship between the identifier of the logical channel between the remote UE and the relay UE and the bearer identifier of the remote UE.

Optionally, the method further includes: The DU receives a downlink RRC information transfer message sent by the CU, where the downlink RRC information transfer message includes downlink RRC information of the remote UE, an identifier of the relay UE on a CU-DU interface, and a first indication, the downlink RRC information includes a downlink RRC message of the remote UE and a packet data convergence protocol PDCP layer and adaptation information that are encapsulated outside the downlink RRC message, the adaptation information is used to indicate that the downlink RRC message is the downlink RRC message of the remote UE, and the first indication is used to indicate that the adaptation information is encapsulated outside the downlink RRC message; and the DU sends the downlink RRC information encapsulated with an RLC layer, a MAC layer, and a PHY layer to the relay UE, where the PHY layer, the MAC layer, or the RLC layer carries a third indication, and the third indication is used to indicate that the adaptation information is encapsulated outside the downlink RRC message.

Based on the optional manner, when an adaptation layer is deployed in a protocol stack of the CU, a transmission process of the downlink RRC message of the remote UE can be implemented in the UE-to-network relay communication process.

Optionally, the method further includes: The DU receives uplink RRC information of the remote UE sent by the relay UE, where the uplink RRC information includes an uplink RRC message of the remote UE, a PDCP layer, adaptation information, and an RLC layer, a MAC layer, and a PHY layer that are encapsulated outside the uplink RRC message, the PHY layer, the MAC layer, or the RLC layer carries a third indication, the third indication is used to indicate that the adaptation information is encapsulated outside the uplink RRC message, and the adaptation information is used to indicate that the uplink RRC message is the uplink RRC message of the remote UE; and the DU sends an uplink RRC information transfer message to the CU, where the uplink RRC information transfer message includes an identifier of the relay UE on a CU-DU interface, a first indication, the uplink RRC message, and a PDCP layer and adaptation information that are encapsulated outside the uplink RRC message.

Based on the optional manner, when the adaptation layer is deployed in the protocol stack of the CU, a transmission process of the uplink RRC message of the remote UE can be implemented in the UE-to-network relay communication process.

Optionally, the method further includes: The DU receives a downlink GTP-U frame sent by the CU, where the downlink GTP-U frame includes downlink data information of the remote UE, a first indication, and a tunnel endpoint identifier of a GTP-U tunnel of the relay UE, the downlink data information includes a downlink data packet of the remote UE and a PDCP layer and adaptation information that are encapsulated outside the downlink data packet, the adaptation information is used to indicate that the downlink data packet is the downlink data packet of the remote UE, and the first indication is used to indicate that the adaptation information is encapsulated outside the downlink data packet; and the DU sends the downlink data information encapsulated with an RLC layer, a MAC layer, and a PHY layer to the relay UE, where the PHY layer, the MAC layer, or the RLC layer carries a third indication, and the third indication is used to indicate that the adaptation information is encapsulated outside the downlink data packet.

Based on the optional manner, when the adaptation layer is deployed in the protocol stack of the CU, a transmission process of the downlink data packet of the remote UE can be implemented in the UE-to-network relay communication process.

Optionally, the method further includes: The DU receives uplink data information of the remote UE sent by the relay UE, where the uplink data information includes an uplink data packet of the remote UE, a PDCP layer, adaptation information, and an RLC layer, a MAC layer, and a PHY layer that are encapsulated outside the uplink data packet, the PHY layer, the MAC layer, or the RLC layer carries a third indication, the third indication is used to indicate that the adaptation information is encapsulated outside the uplink data packet, and the adaptation information is used to indicate that the uplink data packet is the uplink data packet of the remote UE; and the DU sends an uplink GTP-U frame to the CU, where the uplink GTP-U frame includes a first indication, a tunnel endpoint identifier of a GTP-U tunnel of the relay UE, the uplink data packet, and the PDCP layer and the adaptation information that are encapsulated outside the uplink data packet, and the first indication is used to indicate that the adaptation information is encapsulated outside the uplink data packet.

Based on the optional manner, when the adaptation layer is deployed in the protocol stack of the CU, a transmission process of the uplink data packet of the remote UE can be implemented in the UE-to-network relay communication process.

Optionally, the method further includes: The DU receives a UE context setup request message sent by the CU, where the UE context setup request message includes an identifier of the relay UE, the identifier of the remote UE, and a mapping relationship between the bearer identifier of the remote UE and the logical channel, and the UE context setup request message is used to request the DU to set up a context of the remote UE; and the DU generates RRC configuration information of the remote UE based on the identifier of the relay UE, the identifier of the remote UE, and the mapping relationship between the bearer identifier of the remote UE and the logical channel.

Based on the optional manner, when the adaptation layer is deployed in a protocol stack of the DU, a process of setting up the context of the remote UE can be implemented in the UE-to-network relay communication process.

Optionally, the UE context setup request message further carries a second indication, the second indication is used to indicate the DU to add, when sending downlink data information or downlink RRC information of the remote UE to the relay UE, adaptation information to the downlink data information or the downlink RRC information, and the adaptation information is used to indicate that the downlink data information or the downlink RRC information is the downlink data information or the downlink RRC information of the remote UE.

Optionally, the method further includes: The DU receives a downlink RRC information transfer message sent by the CU, where the downlink RRC information transfer message includes the downlink RRC information of the remote UE and an identifier of the remote UE on a CU-DU interface, and the downlink RRC information includes a downlink RRC message of the remote UE and a PDCP layer encapsulated outside the downlink RRC message; and the DU sends the downlink RRC information encapsulated with adaptation information, an RLC layer, a MAC layer, and a PHY layer to the relay UE, where the PHY layer, the MAC layer, or the RLC layer carries a third indication, the third indication is used to indicate that the adaptation information is encapsulated outside the downlink RRC message, and the adaptation information is used to indicate that the downlink RRC message is the downlink RRC message of the remote UE.

Based on the optional manner, when the adaptation layer is deployed in the protocol stack of the DU, a transmission process of the downlink RRC message of the remote UE can be implemented in the UE-to-network relay communication process.

Optionally, the method further includes: The DU receives uplink RRC information sent by the relay UE, where the uplink RRC information includes an uplink RRC message of the remote UE, a PDCP layer, adaptation information, and an RLC layer, a MAC layer, and a PHY layer that are sequentially encapsulated outside the uplink RRC message, the RLC layer, the MAC layer, or the PHY layer carries a third indication, the third indication is used to indicate that the adaptation information is encapsulated outside the uplink RRC message, and the adaptation information is used to indicate that the uplink RRC message is the uplink RRC message of the remote UE; the DU reads the adaptation information in the uplink RRC information based on the third indication, to determine a bearer identifier that is in bearer identifiers of the remote UE and that is used to transmit the uplink RRC information, and an identifier of the remote UE on a CU-DU interface; and the DU sends an uplink RRC information transfer message to the CU, where the uplink RRC information transfer message includes the bearer identifier used to transmit the uplink RRC information, the identifier of the remote UE on the CU-DU interface, the uplink RRC message, and the PDCP layer encapsulated outside the uplink RRC message.

Based on the optional manner, when the adaptation layer is deployed in the protocol stack of the DU, a transmission process of the uplink RRC message of the remote UE can be implemented in the UE-to-network relay communication process.

Optionally, the method further includes: The DU receives a downlink GTP-U frame sent by the CU, where the downlink GTP-U frame includes downlink data information of the remote UE and a tunnel endpoint identifier of a GTP-U tunnel of the remote UE, and the downlink data information includes a downlink data packet of the remote UE and a PDCP layer encapsulated outside the downlink data packet; and the DU sends the downlink data information encapsulated with adaptation information, an RLC layer, a MAC layer, and a PHY layer to the relay UE, where the RLC layer, the MAC layer, or the PHY layer carries a third indication, the third indication is used to indicate that the adaptation information is encapsulated outside the downlink data packet, and the adaptation information is used to indicate that the downlink data packet is the downlink data packet of the remote UE.

Based on the optional manner, when the adaptation layer is deployed in the protocol stack of the DU, a transmission process of the downlink data packet of the remote UE can be implemented in the UE-to-network relay communication process.

Optionally, the method further includes: The DU receives uplink data information sent by the relay UE, where the uplink data information includes an uplink data packet of the remote UE, a PDCP layer, adaptation information, and an RLC layer, a MAC layer, and a PHY layer that are sequentially encapsulated outside the uplink data packet, the RLC layer, the MAC layer, or the PHY layer carries a third indication, the third indication is used to indicate that the adaptation information is encapsulated outside the uplink data packet, and the adaptation information is used to indicate that the uplink data packet is the uplink data packet of the remote UE; the DU reads the adaptation information in the uplink data information based on the third indication, to determine a bearer identifier that is in bearer identifiers of the remote UE and that is used to transmit the uplink data information, and the tunnel endpoint identifier of the GTP-U tunnel of the remote UE corresponding to the bearer identifier used to transmit the uplink data information; and the DU sends an uplink GTP-U frame to the CU, where the uplink GTP-U frame includes the bearer identifier used to transmit the uplink data information, the tunnel endpoint identifier of the GTP-U tunnel of the remote UE, the uplink data packet, and the PDCP layer encapsulated outside the uplink data packet.

Based on the optional manner, when the adaptation layer is deployed in the protocol stack of the DU, a transmission process of the uplink data packet of the remote UE can be implemented in the UE-to-network relay communication process.

For example, the processing unit is configured to generate a UE context modification request message, where the UE context modification request message is used to request a DU to modify a context of relay user equipment UE, the UE context modification request message carries an identifier of remote UE, a bearer identifier of the relay UE, and an identifier of a logical channel having a mapping relationship with the bearer identifier of the relay UE, the bearer identifier of the relay UE is an identifier of a bearer between the relay UE and the CU, and the logical channel is a logical channel between the remote UE and the relay UE; and the processing unit is further configured to send the UE context modification request message to the DU by using the communication unit.

Optionally, the UE context modification request message further carries a bearer identifier of the remote UE having a mapping relationship with the bearer identifier of the relay UE and the identifier of the logical channel, and the bearer identifier of the remote UE is an identifier of a bearer between the remote UE and the CU.

Optionally, the processing unit is further configured to send a downlink RRC information transfer message to the DU by using the communication unit, where the downlink RRC information transfer message includes downlink RRC information of the remote UE, an identifier of the relay UE on a CU-DU interface, and a first indication, the downlink RRC information includes a downlink RRC message of the remote UE and a PDCP layer and adaptation information that are encapsulated outside the downlink RRC message, the adaptation information is used to indicate that the downlink RRC message is the downlink RRC message of the remote UE, and the first indication is used to indicate that the adaptation information is encapsulated outside the downlink RRC message.

Optionally, the processing unit is further configured to receive, by using the communication unit, an uplink RRC information transfer message sent by the DU, where the uplink RRC information transfer message includes uplink RRC information of the remote UE, an identifier of the relay UE on a CU-DU interface, and a first indication, the uplink RRC information includes an uplink RRC message of the remote UE and a PDCP layer and adaptation information that are encapsulated outside the uplink RRC message, the adaptation information is used to indicate that the uplink RRC message is the uplink RRC message of the remote UE, and the first indication is used to indicate that the adaptation information is encapsulated outside the uplink RRC message.

Optionally, the processing unit is further configured to send a downlink GTP-U frame to the DU by using the communication unit, where the downlink GTP-U frame includes downlink data information of the remote UE, a first indication, and a tunnel endpoint identifier of a GTP-U tunnel of the relay UE, the downlink data information includes a downlink data packet of the remote UE and a PDCP layer and adaptation information that are encapsulated outside the downlink data packet, the adaptation information is used to indicate that the downlink data packet is a downlink data packet of the remote UE, and the first indication is used to indicate that the adaptation information is encapsulated outside the downlink data packet.

Optionally, the processing unit is further configured to receive, by using the communication unit, an uplink GTP-U frame sent by the DU, where the uplink GTP-U frame includes uplink data information of the remote UE, a first indication, and a tunnel endpoint identifier of a GTP-U tunnel of the relay UE, the uplink data information includes an uplink data packet of the remote UE and a PDCP layer and adaptation information that are encapsulated outside the uplink data packet, the adaptation information is used to indicate that the uplink data packet is the uplink data packet of the remote UE, and the first indication is used to indicate that the adaptation information is encapsulated outside the uplink data packet.

Optionally, the processing unit is further configured to send a UE context setup request message to the DU by using the communication unit, where the UE context setup request message includes an identifier of the relay UE, the identifier of the remote UE, and a mapping relationship between the bearer identifier of the remote UE and the logical channel, and the UE context setup request message is used to request DU to set up a context of the remote UE.

Optionally, the UE context modification request message further carries a second indication, the second indication is used to indicate the DU to add, when sending downlink data information or downlink RRC information of the remote UE, adaptation information to the downlink data information or the downlink RRC information, and the adaptation information is used to indicate that the downlink data information or the downlink RRC information is the downlink data information or the downlink RRC information of the remote UE.

Optionally, before generating the UE context modification request message, the processing unit is further configured to receive, from the DU by using the communication unit, an RRC connection setup request message, an RRC re-establishment request message, or an RRC resume request message that is of the remote UE and that is forwarded by the relay UE.

In an optional design, when the communication apparatus is the CU, the processing unit may be, for example, a processor, and the communication unit may include, for example, a network interface. Optionally, the CU further includes a storage unit, and the storage unit may be, for example, a memory. When the communication apparatus includes the storage unit, the storage unit is configured to store computer-executable instructions. The processing unit is connected to the storage unit. The processing unit executes the computer-executable instructions stored in the storage unit, to enable the CU to perform the method according to the first aspect.

In another possible design, when the communication apparatus is the chip in the CU, the processing unit may be, for example, a processor, and the communication unit may be, for example, an input/output interface, a pin, or a circuit. The processing unit may execute the computer-executable instructions stored in the storage unit, to enable the chip to perform the communication method according to any one of the first aspect or the implementations of first aspect. Optionally, the storage unit is a storage unit, for example, a register or a cache, in the chip, or the storage unit may be a storage unit in the CU but outside the chip, for example, a read-only memory (read-only memory, ROM) or another type of static storage device capable of storing static information and instructions, or a random access memory (random access memory, RAM).

For technical effects of the communication apparatus provided in this application, refer to technical effects of the second aspect or the implementations of the second aspect. Details are not described herein again.

For example, the processing unit is configured to receive, by using the communication unit, a UE context modification request message sent by a CU, where the UE context modification request message carries an identifier of remote UE, a bearer identifier of relay UE, and an identifier of a logical channel having a mapping relationship with the bearer identifier of the relay UE, the bearer identifier of the relay UE is an identifier of a bearer between the relay UE and the CU, and the logical channel is a logical channel between the remote UE and the relay UE; and the processing unit is further configured to generate RRC configuration information of the relay UE based on the identifier of the remote UE, the bearer identifier of the relay UE, and the identifier of the logical channel, where the RRC configuration information includes a mapping relationship among the identifier of the remote UE, the bearer identifier of the relay UE, and the identifier of the logical channel.

Optionally, the UE context modification request message further carries a bearer identifier of the remote UE having a mapping relationship with the bearer identifier of the relay UE and the identifier of the logical channel, and the bearer identifier of the remote UE is an identifier of a bearer between the remote UE and the CU; and a mapping relationship between the bearer identifier of the relay UE and the identifier of the logical channel is specifically the mapping relationship among the bearer identifier of the relay UE, the identifier of the logical channel, and the bearer identifier of the remote UE.

Optionally, the processing unit is further configured to receive, by using the communication unit, a downlink RRC information transfer message sent by the CU, where the downlink RRC information transfer message includes downlink RRC information of the remote UE, an identifier of the relay UE on a CU-DU interface, and a first indication, the downlink RRC information includes a downlink RRC message of the remote UE and a packet data convergence protocol PDCP layer and adaptation information that are encapsulated outside the downlink RRC message, the adaptation information is used to indicate that the downlink RRC message is the downlink RRC message of the remote UE, and the first indication is used to indicate that the adaptation information is encapsulated outside the downlink RRC message; and the processing unit is further configured to send, by using the communication unit, the downlink RRC information encapsulated with an RLC layer, a MAC layer, and a PHY layer to the relay UE, where the PHY layer, the MAC layer, or the RLC layer carries a third indication, and the third indication is used to indicate that the adaptation information is encapsulated outside the downlink RRC message.

Optionally, the processing unit is further configured to receive, by using the communication unit, uplink RRC information of the remote UE sent by the relay UE, where the uplink RRC information includes an uplink RRC message of the remote UE, a PDCP layer, adaptation information, and an RLC layer, a MAC layer, and a PHY layer that are encapsulated outside the uplink RRC message, the PHY layer, the MAC layer, or the RLC layer carries a third indication, the third indication is used to indicate that the adaptation information is encapsulated outside the uplink RRC message, and the adaptation information is used to indicate that the uplink RRC message is the uplink RRC message of the remote UE; and the processing unit is further configured to send an uplink RRC information transfer message to the CU by using the communication unit, where the uplink RRC information transfer message includes an identifier of the relay UE on a CU-DU interface, a first indication, the uplink RRC message, and the PDCP layer and the adaptation information that are encapsulated outside the uplink RRC message.

Optionally, the processing unit is further configured to receive, by using the communication unit, a downlink GTP-U frame sent by the CU, where the downlink GTP-U frame includes downlink data information of the remote UE, a first indication, and a tunnel endpoint identifier of a GTP-U tunnel of the relay UE, the downlink data information includes a downlink data packet of the remote UE and a PDCP layer and adaptation information that are encapsulated outside the downlink data packet, the adaptation information is used to indicate that the downlink data packet is the downlink data packet of the remote UE, and the first indication is used to indicate that the adaptation information is encapsulated outside the downlink data packet; and the processing unit is further configured to send, by using the communication unit, the downlink data information encapsulated with an RLC layer, a MAC layer, and a PHY layer to the relay UE, where the PHY layer, the MAC layer, or the RLC layer carries a third indication, and the third indication is used to indicate that the adaptation information is encapsulated outside the downlink data packet.

Optionally, the processing unit is further configured to receive, by using the communication unit, uplink data information of the remote UE sent by the relay UE, where the uplink data information includes an uplink data packet of the remote UE, a PDCP layer, adaptation information, and an RLC layer, a MAC layer, and a PHY layer that are encapsulated outside the uplink data packet, the PHY layer, the MAC layer, or the RLC layer carries a third indication, the third indication is used to indicate that the adaptation information is encapsulated outside the uplink data packet, and the adaptation information is used to indicate that the uplink data packet is the uplink data packet of the remote UE; and the processing unit is further configured to send an uplink GTP-U frame to the CU by using the communication unit, where the uplink GTP-U frame includes a first indication, a tunnel endpoint identifier of a GTP-U tunnel of the relay UE, the uplink data packet, and the PDCP layer and the adaptation information that are encapsulated outside the uplink data packet, and the first indication is used to indicate that the adaptation information is encapsulated outside the uplink data packet.

Optionally, the processing unit is further configured to receive, by using the communication unit, a UE context setup request message sent by the CU, where the UE context setup request message includes an identifier of the relay UE, the identifier of the remote UE, and a mapping relationship between the bearer identifier of the remote UE and the logical channel, and the UE context setup request message is used to request the DU to set up a context of the remote UE; and the processing unit is further configured to generate RRC configuration information of the remote UE by using the communication unit based on the identifier of the relay UE, the identifier of the remote UE, and the mapping relationship between the bearer identifier of the remote UE and the logical channel.

Optionally, the UE context setup request message further carries a second indication, the second indication is used to indicate the DU to add, when sending downlink data information or downlink RRC information of the remote UE to the relay UE, adaptation information to the downlink data information or the downlink RRC information, and the adaptation information is used to indicate that the downlink data information or the downlink RRC information is the downlink data information or the downlink RRC information of the remote UE.

Optionally, the processing unit is further configured to receive, by using the communication unit, a downlink RRC information transfer message sent by the CU, where the downlink RRC information transfer message includes the downlink RRC information of the remote UE and an identifier of the remote UE on a CU-DU interface, and the downlink RRC information includes a downlink RRC message of the remote UE and a PDCP layer encapsulated outside the downlink RRC message; and the processing unit is further configured to send, by using the communication unit, the downlink RRC information encapsulated with adaptation information, an RLC layer, a MAC layer, and a PHY layer to the relay UE, where the PHY layer, the MAC layer, or the RLC layer carries a third indication, the third indication is used to indicate that the adaptation information is encapsulated outside the downlink RRC message, and the adaptation information is used to indicate that the downlink RRC message is the downlink RRC message of the remote UE.

Optionally, the processing unit is further configured to receive, by using the communication unit, uplink RRC information sent by the relay UE, where the uplink RRC information includes an uplink RRC message of the remote UE, a PDCP layer, adaptation information, and an RLC layer, a MAC layer, and a PHY layer that are sequentially encapsulated outside the uplink RRC message, the RLC layer, the MAC layer, or the PHY layer carries a third indication, the third indication is used to indicate that the adaptation information is encapsulated outside the uplink RRC message, and the adaptation information is used to indicate that the uplink RRC message is the uplink RRC message of the remote UE; the processing unit is further configured to read the adaptation information in the uplink RRC information based on the third indication, to determine a bearer identifier that is in bearer identifiers of the remote UE and that is used to transmit the uplink RRC information, and an identifier of the remote UE on a CU-DU interface; and the processing unit is further configured to send an uplink RRC information transfer message to the CU by using the communication unit, where the uplink RRC information transfer message includes the bearer identifier used to transmit the uplink RRC information, the identifier of the remote UE on the CU-DU interface, the uplink RRC message, and the PDCP layer encapsulated outside the uplink RRC message.

Optionally, the processing unit is further configured to receive, by using the communication unit, a downlink GTP-U frame sent by the CU, where the downlink GTP-U frame includes downlink data information of the remote UE and a tunnel endpoint identifier of a GTP-U tunnel of the remote UE, and the downlink data information includes a downlink data packet of the remote UE and a PDCP layer encapsulated outside the downlink data packet; and the processing unit is further configured to send, by using the communication unit, the downlink data information encapsulated with adaptation information, an RLC layer, a MAC layer, and a PHY layer to the relay UE, where the RLC layer, the MAC layer, or the PHY layer carries a third indication, the third indication is used to indicate that the adaptation information is encapsulated outside the downlink data packet, and the adaptation information is used to indicate that the downlink data packet is the downlink data packet of the remote UE.

Optionally, the processing unit is further configured to receive, by using the communication unit, uplink data information sent by the relay UE, where the uplink data information includes an uplink data packet of the remote UE, a PDCP layer, adaptation information, and an RLC layer, a MAC layer, and a PHY layer that are sequentially encapsulated outside the uplink data packet, the RLC layer, the MAC layer, or the PHY layer carries a third indication, the third indication is used to indicate that the adaptation information is encapsulated outside the uplink data packet, and the adaptation information is used to indicate that the uplink data packet is the uplink data packet of the remote UE; the processing unit is further configured to read the adaptation information in the uplink data information based on the third indication, to determine a bearer identifier that is in bearer identifiers of the remote UE and that is used to transmit the uplink data information, and the tunnel endpoint identifier of the GTP-U tunnel of the remote UE corresponding to the bearer identifier used to transmit the uplink data information; and the processing unit is further configured to send an uplink GTP-U frame to the CU by using the communication unit, where the uplink GTP-U frame includes the bearer identifier used to transmit the uplink data information, the tunnel endpoint identifier of the GTP-U tunnel of the remote UE, the uplink data packet, and the PDCP layer encapsulated outside the uplink data packet.

In an optional design, when the communication apparatus is the DU, the processing unit may be, for example, a processor, and the communication unit may include, for example, an antenna, a transceiver, and a network interface. Optionally, the communication apparatus further includes a storage unit, and the storage unit may be, for example, a memory. When the communication apparatus includes the storage unit, the storage unit is configured to store computer-executable instructions. The processing unit is connected to the storage unit. The processing unit executes the computer-executable instructions stored in the storage unit, to enable the DU to perform the method according to the second aspect.

In another possible design, when the communication apparatus is the chip in the DU, the processing unit may be, for example, a processor, and the communication unit may be, for example, an input/output interface, a pin, or a circuit. The processing unit may execute the computer-executable instructions stored in the storage unit, to enable the chip to perform the communication method according to any one of the second aspect or the implementations of second aspect. Optionally, the storage unit is a storage unit, for example, a register or a cache, in the chip, or the storage unit may be a storage unit in the DU but outside the chip, for example, a ROM or another type of static storage device capable of storing static information and instructions, or a random access memory RAM.

For technical effects of the apparatus provided in this application, refer to technical effects of the second aspect or the implementations of the second aspect. Details are not described herein again.

For example, the processor mentioned above may be a general-purpose central processing unit (Central Processing Unit, CPU), a microprocessor, an application-specific integrated circuit (application-specific integrated circuit, ASIC), or one or more integrated circuits configured to control program execution of the method according to the second aspect.

For technical effects of the communication apparatus provided in this application, refer to technical effects of the second aspect or the implementations of the second aspect. Details are not described herein again.

### BRIEF DESCRIPTION OF DRAWINGS

FIG. 1 is a schematic diagram of a UE-to-network relay communication system according to this application;
FIG. 2 is a schematic structural diagram of a base station deployed based on a CU-DU architecture according to this application;
FIG. 3 is a schematic diagram of a possible user plane protocol stack according to this application;
FIG. 4 is a schematic diagram of a possible control plane protocol stack according to this application;
FIG. 5 is a schematic diagram of a UE-to-network relay communication principle according to this application;
FIG. 6 is a flowchart of an embodiment of a communication method according to this application;
FIG. 7 is a schematic diagram of another possible user plane protocol stack according to this application;
FIG. 8 is a schematic diagram of another possible control plane protocol stack according to this application;
FIG. 9 is a schematic diagram of another UE-to-network relay communication principle according to this application;
FIG. 10A and FIG. 10B are a flowchart of an embodiment of another communication method according to this application;
FIG. 11 is a schematic structural diagram of a communication apparatus according to this application;
FIG. 12 is a schematic structural diagram of a CU according to this application; and
FIG. 13 is a schematic structural diagram of a DU according to this application.

### DESCRIPTION OF EMBODIMENTS

First, in descriptions of this application, "/" means "or" unless otherwise specified. For example, AB may represent A or B. In this application, "and/or" describes only an association relationship for describing associated objects and may represent that three relationships may exist. For example, A and/or B may represent the following three cases: Only A exists, both A and B exist, and only B exists. In addition, in the descriptions of this application, "a plurality of" refers to two or more.

Second, a communication method provided in this application is used in a CU-DU architecture, to implement UE-to-network relay communication. For ease of understanding the communication method provided in this application, the following describes an L2 relay-based UE-to-network relay communication system and a base station using the CU-DU architecture by using examples with reference to accompanying drawings.

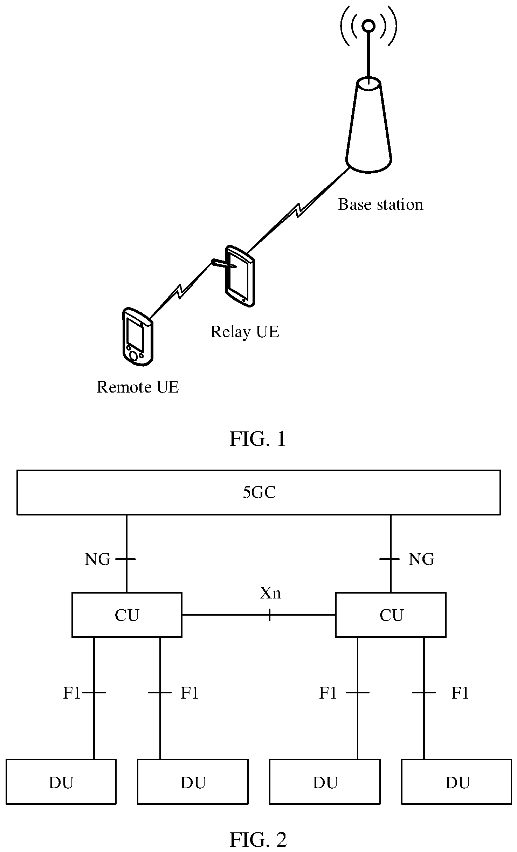

FIG. 1 shows a UE-to-network relay communication system according to this application. The communication system includes a base station and a plurality of user equipments (user equipment, UE). In the plurality of UEs, some UEs may serve as relays to provide relay services for the other UEs. For ease of description, in the following specification, UE that can provide the relay service is referred to as relay UE, and UE that exchanges information with a base station through the relay UE is referred to as remote (remote) UE. In the UE-to-network relay communication system, the remote UE sends data and an RRC message of the remote UE to the relay UE, and the relay UE forwards the data and the RRC message of the remote UE to the base station by using a bearer between the relay UE and the base station. For example, the bearer may be a data radio bearer (data radio bearer, DRB) or a signaling radio bearer (signal radio bearer, SRB) between the relay UE and the base station. Usually, the relay UE forwards the data of the remote UE to the base station by using a DRB of the relay UE, and forwards the RRC message of the remote UE to the base station by using an SRB of the relay UE. It is also not excluded that the relay UE forwards the RRC message of the remote UE to the base station by using the DRB of the relay UE, and forwards the data of the remote UE to the base station by using the SRB of the relay UE.

The base station in FIG. 1 may be a base station deployed based on a CU-DU architecture. To be specific, functions of a conventional base station in an LTE system are separately deployed on two units: a CU and a DU. For example, functions of an RLC layer, a MAC layer, and a PHY layer of the conventional base station in the LTE system are deployed on the DU, and the remaining functions (for example, functions of an RRC layer and a PDCP layer) are deployed on the CU. In addition, a function of a non-access stratum (non-access stratum, NAS) of a core network in the LTE system is also deployed on the CU. Optionally, in a fifth generation mobile communication technology (the 5th Generation mobile communication technology, 5G) system, a function of an SDAP layer may further be deployed above the PDCP layer on the CU.

As shown in FIG. 2, a base station deployed based on the CU-DU architecture may include one CU and a plurality of DUs, and the plurality of DUs may share one CU, thereby reducing costs and expanding an edge network. In the 5G system, the CU and the DU are connected through an F1 interface. In the LTE system, the CU and the DU are connected through a V1/W1 interface. In the 5G system, CUs are connected through an Xn interface to represent that base stations to which the CUs belong implement information exchange between the base stations through the Xn interface. In the 5G system, the CU and a 5G core network (5GC) are connected through an NG interface to represent that a base station to which the CU belongs performs information exchange with a core network device through the NG interface. The 5GC may include an access and mobility management function (access and mobility management function, AMF) and/or a user plane function (user plane function, UPF) in the 5G system.

The UE in this application (for example, the relay UE and the remote UE mentioned in this application) may be a handheld device having a wireless communication function, a vehicle-mounted device, a wearable device, a computing device, or another processing device connected to a wireless modem, and various forms of UEs, a mobile station (mobile station, MS), a terminal (terminal), a terminal device (terminal equipment), or the like. For ease of description, in this application, these devices are referred to as user equipments or UEs for short.

In UE-to-network relay communication, the relay UE transmits a data packet and an RRC message of the remote UE to a base station by using a bearer of the relay UE. Therefore, an adaptation layer is usually deployed in a protocol stack between the relay UE and the base station, to deploy adaptation information for the relay UE or the base station to learn of the remote UE, a bearer of the remote UE, and/or a logical channel between the remote UE and the relay UE. For example, in uplink, the relay UE may learn, based on RRC configuration information of the base station, that the received data packet/RRC message of the remote UE needs to be transmitted to the base station by using which DRB/SRB of the relay UE. Then the relay UE encapsulates the adaptation information of the adaptation layer outside the data packet/RRC message of the remote UE, so that the base station learns that the data packet/RRC message is transmitted by which bearer of which remote UE or by which UE, and through which logical channel between the remote UE and the relay UE. In downlink, the base station encapsulates the adaptation information outside the data packet/RRC message. After receiving the data packet/RRC message from the base station by using a DRB/SRB, the relay UE learns, by using the adaptation information encapsulated outside the data packet/RRC message by the base station, that the data packet/RRC message needs to be forwarded to which remote UE and the data packet/RRC message needs to be sent to which bearer of the remote UE, or the data packet/RRC message needs to be sent to the remote UE through which logical channel between the relay UE and the remote UE.

In the CU-DU architecture, the adaptation layer may be deployed in a protocol stack of the CU, or may be deployed in a protocol stack of the DU. The following separately describes the communication method provided in this application by using two deployment manners: deploying the adaptation layer in the protocol stack of the CU and deploying the adaptation layer in the protocol stack of the DU.

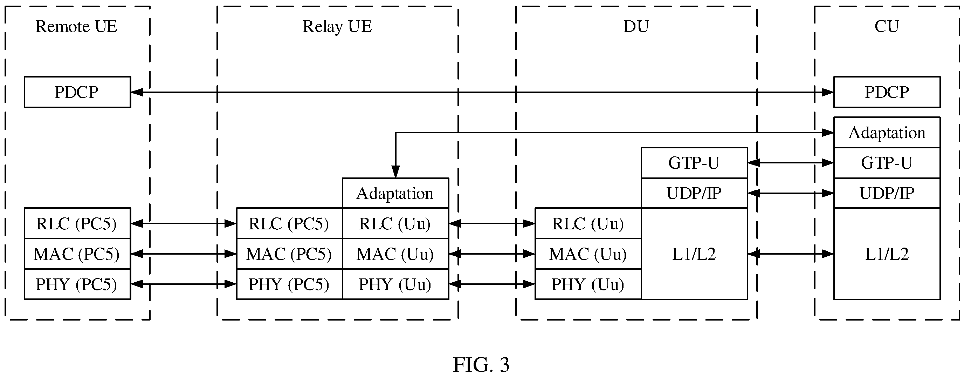

For a manner in which the adaptation layer is deployed in the protocol stack of the CU, a possible user plane protocol stack among the remote UE, the relay UE, the CU, and the DU in the UE-to-network relay communication system may be shown in FIG. 3. The remote UE exchanges information with the relay UE through a PC5 interface, and establishes an end-to-end PDCP layer with the CU for interaction. The relay UE exchanges information with the DU through a Uu interface. A PDCP packet of the remote UE is transparently transmitted to the CU through the relay UE and the DU, while an RLC packet, a MAC packet, and a PHY packet need to be processed by the relay UE and the DU. Therefore, as shown in FIG. 3, a user plane protocol stack of the remote UE includes a PDCP layer, and an RLC layer, a MAC layer, and a PHY layer that are on the PC5 interface; a user plane protocol stack of the relay UE on the PC5 interface includes an RLC layer, a MAC layer, and a PHY layer, and a user plane protocol stack of the relay UE on the Uu interface between the relay UE and the DU includes an RLC layer, a MAC layer, and a PHY layer. In addition, the user plane protocol stack of the relay UE further includes an adaptation layer, and adaptation information of the adaptation layer is transparently transmitted to the CU through the DU. A user plane protocol stack of the DU on the Uu interface between the DU and the relay UE includes an RLC layer, a MAC layer, and a PHY layer. A user plane protocol stack between the DU and the CU includes a layer 1/layer 2 (layer 1/layer 2, L1/L2) layer, a user datagram protocol/internet protocol (User Datagram Protocol/Internet Protocol, UDP/IP) layer, and a general packet radio service technology tunneling protocol (General Packet Radio Service Tunneling Protocol User Plane, GTP-U) layer. A user plane protocol stack of the CU includes an L1/L2 layer, a UDP/IP layer, and a GTP-U layer that are between the CU and the DU, an adaptation layer between the CU and the relay UE, and a PDCP layer on a Uu interface between the CU and the remote UE.

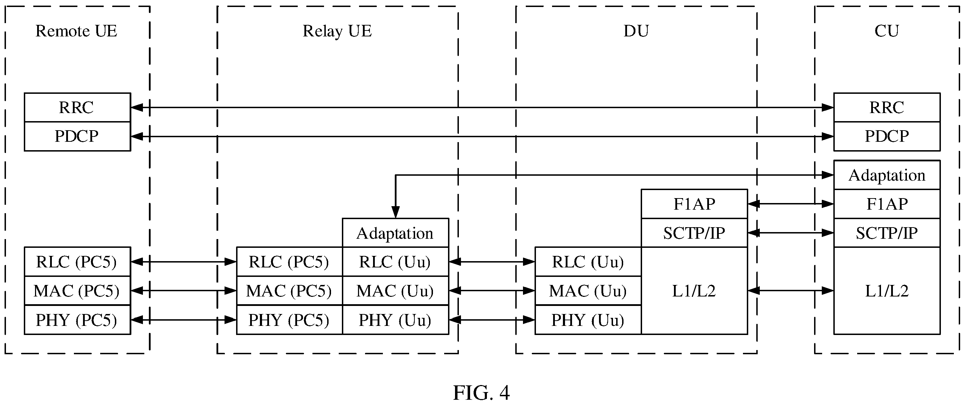

Corresponding to FIG. 3, a possible control plane protocol stack among the remote UE, the relay UE, the CU, and the DU in the UE-to-network relay communication system may be shown in FIG. 4. A control plane protocol stack of the remote UE includes an RRC layer and a PDCP layer between the remote UE and the CU, and an RLC layer, a MAC layer, and a PHY layer on the PC5 interface between the remote UE and the relay UE. A control plane protocol stack of the relay UE includes an RLC layer, a MAC layer, and a PHY layer on the PC5 interface between the relay UE and the remote UE, an RLC layer, a MAC layer, and a PHY layer on the Uu interface between the relay UE and the DU, and an adaptation layer between the relay UE and the CU. A control plane protocol stack of the DU includes an RLC layer, a MAC layer, and a PHY layer that are on the Uu interface between the DU and the relay UE, an L1/L2 layer between the DU and the CU, a stream control transmission protocol/internet protocol (Stream Control Transmission Protocol/Internet Protocol, SCTP/IP) layer, and an F1 application protocol (F1 Application Protocol, FlAP) layer. A control plane protocol stack of the CU includes an L1/L2 layer, an SCTP/IP layer, and an F1AP layer that are between the CU and the DU, an adaptation layer between the CU and the relay UE, and a PDCP layer and an RRC layer that are on the Uu interface between the CU and the remote UE.

For solutions to setting the adaptation layer in the protocol stack between the relay UE and the CU, for example, this application provides two solutions, including the following solution 1 and solution 2.

Solution 1: The protocol stack between the CU and the relay UE does not include the adaptation layer when the data packet/RRC message of the relay UE is transmitted, and the protocol stack between the CU and the relay UE includes the adaptation layer only when the data packet/RRC message of the remote UE is transmitted. In other words, in uplink, when the relay UE sends an uplink data packet/uplink RRC message, if an uplink data packet/uplink RRC message of the relay UE is sent, the relay UE does not need to encapsulate adaptation information for the uplink data packet/uplink RRC message. If an uplink data packet/uplink RRC message of the remote UE is sent, the relay UE needs to encapsulate adaptation information for the uplink data packet/uplink RRC message, to indicate to the CU that the uplink data packet/uplink RRC message belongs to the remote UE. Similarly, in downlink, when the CU sends a downlink data packet/downlink RRC message, if a downlink data packet/downlink RRC message of the relay UE is sent, the CU does not need to encapsulate adaptation information for the downlink data packet/downlink RRC message. If a downlink data packet/downlink RRC message of the remote UE is sent, the CU needs to encapsulate adaptation information for the downlink data packet/downlink RRC message, to indicate to the relay UE that the downlink data packet/downlink RRC message belongs to the remote UE. Since the adaptation layer may or may not exist, it is necessary for each of the relay and the base station to indicate, when each data packet/RRC message is sent, to the other whether the adaptation layer exists.

Solution 2: The protocol stack between the CU and the relay UE always includes the adaptation layer. In uplink, regardless of whether the relay UE sends the data packet/RRC message of the relay UE or forwards the data packet/RRC message of the remote UE, the relay UE encapsulates the adaptation information for the sent data packet/RRC message, so that the CU learns whether the data packet/RRC message sent by the relay UE belongs to the remote UE or the relay UE. In downlink, regardless of whether the CU sends the data packet/RRC message to the remote UE through the relay UE, or directly sends the data packet/RRC message to the relay UE, the CU encapsulates configuration information for the sent data packet/RRC message, so that the relay UE learns whether the data packet/RRC message delivered by the CU is sent to the relay UE or the remote UE. For the solution 2, since the adaptation layer always exists, each of the relay and the base station does not need to indicate, when each data packet/RRC message is sent, to the other whether the adaptation layer exists.

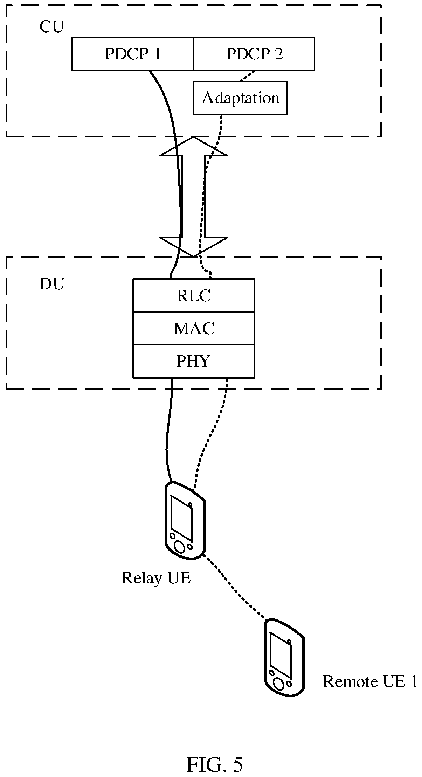

In this case, based on the protocol stacks shown in FIG. 3 and FIG. 4, in the CU-DU architecture, because the adaptation layer is deployed in the protocol stack of the CU, the DU does not need to determine whether the received data packet/RRC message sent by the relay UE belongs to the relay UE or the remote UE. For a user plane data packet, the DU may directly transmit, through a GTP-U tunnel corresponding to a DRB that is of the relay UE and that is used to send the data packet, the data packet to the CU. For an RRC message of a control plane, the DU directly sends the RRC message to the CU by using a control plane message of an interface (for example, the F1 interface in the 5G system) that is between the CU and the DU and that is related to the relay UE. As shown in FIG. 5, if the data packet/RRC message belongs to the relay UE, the CU sends the data packet/RRC message to a PDCP entity corresponding to the relay UE (for a communication route, refer to a thick solid line shown in FIG. 5, and a PDCP 1 is the PDCP entity corresponding to the relay UE). If the data packet/RRC message belongs to the remote UE, after receiving the data packet/RRC message from the GTP-U tunnel or the F1 interface of the relay UE, the CU determines, according to an indication of the adaptation information of the adaptation layer, that the data packet/RRC message belongs to which bearer of which remote UE. For example, if the CU determines, based on the adaptation information, that the data packet/RRC message belongs to remote UE 1, the CU sends the data packet/RRC message to a corresponding PDCP entity (for a communication route, refer to a dashed line shown in FIG. 5, and a PDCP 2 is the PDCP entity corresponding to the relay UE).

It can be learned from the foregoing communication principle that, in a scenario in which the adaptation layer is deployed in the protocol stack of the CU, when one remote UE requests to set up an RRC connection, or requests to resume an RRC connection, or requests to re-establish an RRC connection to a base station in the CU-DU architecture through relay UE, the CU and the DU may not need to set up a context for the remote UE, but need to modify a context of the relay UE, so that the relay UE can provide a relay service for the remote UE.

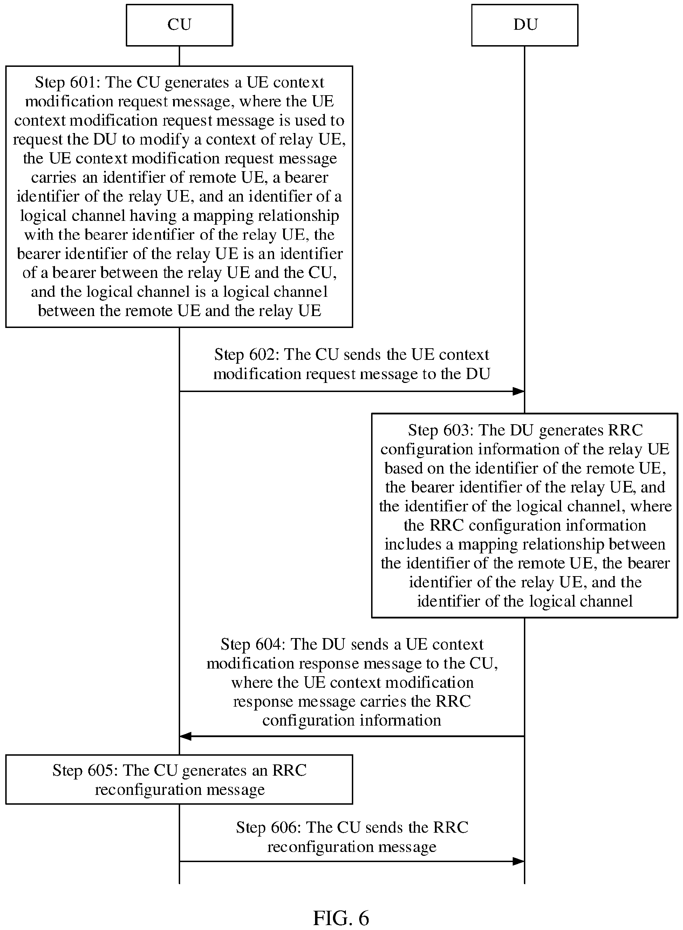

For example, FIG. 6 is a flowchart of an embodiment of a communication method according to this application. FIG. 6 mainly describes a process in which remote UE requests to set up an RRC connection or resume an RRC connection, or requests to re-establish an RRC connection to a base station through relay UE when an adaptation layer is deployed on a CU side. The method includes the following steps.

Step 601: A CU generates a UE context modification request (UE context modification request) message, where the UE context modification request message is used to request a DU to modify a context of relay UE, the UE context modification request message carries an identifier of remote UE, a bearer identifier of the relay UE, and an identifier of a logical channel having a mapping relationship with the bearer identifier of the relay UE, the bearer identifier of the relay UE is an identifier of a bearer between the relay UE and the CU, and the logical channel is a logical channel between the remote UE and the relay UE.

For example, the logical channel between the remote UE and the relay UE is a logical channel of a sidelink between the remote UE and the relay UE, or a logical channel of a PC5 interface (which may also be referred to as a sidelink interface) between the remote UE and the relay UE, where the remote UE and the relay UE exchange information through the logical channel in a direct transmission manner.

In this application, after receiving a request message (for example, an RRC connection request message, an RRC re-establishment request message, or an RRC resume request message) of the remote UE, the CU may generate the UE context modification request message, to request the DU to modify the context of the relay UE that provides the relay service for the remote UE.

For example, the identifier of the remote UE may be an identifier of the remote UE carried in the request message of the remote UE that is received by the CU. For example, the identifier of the remote UE may be a layer 2 identifier (layer 2 identification, L2ID) of the remote UE, or may be an identifier of a PC5 interface that is of the remote UE and that is between the remote UE and the relay UE, or a combination of the L2ID of the remote UE and the identifier of the PC5 interface. The identifier of the remote UE may be included in the request message by the remote UE, or may be carried in the adaptation information when the relay UE forwards the request message. The CU determines, based on the received identifier of the remote UE, that the request is a request of the remote UE, and the relay UE that forwards the request message serves as a relay to provide a relay service for the remote UE. Therefore, the CU needs to allocate a bearer of the relay UE to the remote UE, and determine which bearer of the relay UE forwards the data packet/RRC message of the remote UE. In other words, the CU needs to determine the mapping relationship between the bearer identifier of the relay UE and the identifier of the logical channel. For example, the CU may request to add a DRB and an SRB for the relay UE. Then, the CU may determine a mapping relationship between an identifier of the newly added DRB and an identifier of the logical channel between the relay UE and the remote UE, and a mapping relationship between an identifier of the SRB and the identifier of the logical channel between the relay UE and the remote UE.

Alternatively, the CU may modify an identifier set that is of the logical channel corresponding to the identifier of the DRB and the identifier of the SRB and that has been allocated to the relay UE, to be specific, add the identifier of the remote UE and the identifier of the logical channel between the relay UE and the remote UE to the identifier set that is of the logical channel corresponding to the identifier of the DRB and the identifier of the SRB and that is allocated to the relay UE.

It should be noted that when there are a plurality of logical channels between the relay UE and the remote UE, the CU may allocate different SRBs or DRBs of the relay UE to each logical channel. Alternatively, the CU may allocate same SRBs or DRBs of the relay UE to the plurality of logical channels. That is, one bearer of the relay UE may correspond to one or more logical channels between the relay UE and different remote UEs.

For example, remote UE 2 is used as an example. It is assumed that the remote UE 2 requests an RRC connection to the CU and the DU through the relay UE, and remote UE 1 has completed the RRC connection through the relay UE. Current bearer usage of the relay UE is that: An SRB 1 and a DRB 1 of the relay UE are used to transmit an RRC message and a data packet of the relay UE, an SRB 2 of the relay UE has a mapping relationship with a logical channel LCID 1 between the remote UE 1 and the relay UE (that is, uplink and downlink RRC messages of the remote UE 1 are transmitted by using the SRB 2 of the relay UE), and a DRB 2 of the relay UE has a mapping relationship with a logical channel LCID 2 between the remote UE 1 and the relay UE (that is, uplink and downlink data packets of the remote UE 1 are transmitted by using the DRB 2 of the relay UE).

When the CU receives an RRC connection request message of the remote UE 2 forwarded by the relay UE, the CU may determine that logical channels LCID 3 and LCID 4 of the PC5 interface between the remote UE and the relay UE are logical channels used to transmit RRC messages of an SRB 1 and an SRB 2, and a logical channel LCID 5 and a logical channel LCID 6 are logical channels used to transmit data packets of a DRB 1 and a DRB 2 of the remote UE. Then, the CU separately allocates SRBs of the relay UE to the LCID 3 and the LCID 4, and allocates DRBs of the relay UE to the LCID 5 and the LCID 6. For example, the CU establishes mapping relationships between an identifier of the SRB 2 of the relay UE and the LCID 3 and the LCID 4, to determine that the uplink and downlink RRC messages that correspond to the SRB 1 and the SRB 2 of the remote UE 2 and that are transmitted on the logical channels LCID 3 and LCID 4 are transmitted by using the SRB 2 of the relay UE. In this case, the CU may add the LCID 3 and the LCID 4 to the identifier set of the logical channel corresponding to the identifier of the SRB 2 of the relay UE, and a modified identifier of the SRB 2 of the relay UE corresponds to the identifier of the remote UE 1, the LCID 1, an identifier of the remote UE 2, the LCID 3, and the LCID 4.

The CU requests to add a DRB of the relay, and establishes mapping relationships between the added DRB and the LCID 5 and the LCID 6. For example, the CU requests to add a DRB 3, and establishes mapping relationships between an identifier of the DRB 3 of the relay UE and the LCID 5 and the LCID 6, to determine that the uplink and downlink data packets that are of the DRB 1 and the DRB 2 of the remote UE 2 and that are transmitted on the LCID 5 and the LCID 6 are transmitted by using the DRB 3 of the relay UE.

After determining the mapping relationship between the bearer identifier of the relay UE and the identifier of the logical channel, the CU may include the identifier of the remote UE, a modified or added bearer identifier of the relay UE, and the identifier of the logical channel having a mapping relationship with the modified or added bearer identifier of the relay UE in the UE context modification request message, and send the UE context modification request message to the DU, to request the DU to modify an RRC configuration and a context of the relay UE.

For example, the UE context modification request message carries the identifier of the remote UE 2, the identifier of the SRB 2 of the relay UE, the LCID 3 and the LCID 4 corresponding to the identifier of the SRB 2 of the relay UE, the identifier of the DRB 3 of the relay UE, and the LCID 5 and the LCID 6 corresponding to the identifier of the DRB 3 of the relay UE. The CU requests, by using the UE context modification request message, the DU to modify the context of the relay UE, and generates RRC configuration information for the relay UE, so that the RRC configuration information of the relay UE includes the identifier of the remote UE 2, the mapping relationships between the identifier of the SRB 2 of the relay UE and the LCID 3 and the LCID 4, and the mapping relationships between the identifier of the DRB 3 of the relay UE and the LCID 5 and the LCID 6.

It should be noted that if the CU requests the relay UE to add a DRB, for example, the CU requests to add the DRB 3 of the relay UE, the CU may include a tunnel endpoint identifier (tunnel endpoint identity, TEID) of a GTP-U tunnel of the DRB 3 of the relay UE on the CU side in the UE context modification request message, to request the DU to feed back a TEID of the GTP-U tunnel of the DRB 3 of the relay UE on a DU side.

In an example, when the DU generates RRC configuration information for the remote UE, the RRC configuration information of the remote UE needs to include the bearer identifier of the remote UE and the mapping relationship between the identifier of the logical channel between the remote UE and the relay UE and the bearer identifier of the remote UE. Therefore, the CU may further include the bearer identifier of the remote UE having a mapping relationship with the bearer identifier of the relay UE and the identifier of the logical channel in the UE context modification request message and send the UE context modification request message to the DU, so that the DU generates the RRC configuration information for the remote UE. For example, the bearer identifier of the remote UE is an identifier of a bearer between the remote UE and the CU. In other words, in a process of generating the UE context modification request message by the CU, the CU may establish a mapping relationship among the bearer identifier of the relay UE, the bearer identifier of the remote UE, and the identifier of the logical channel between the relay UE and the remote UE. A bearer of the remote UE is in a one-to-one correspondence with the logical channel between the relay UE and the remote UE. For example, the DRB 1 of the remote UE 2 corresponds to the LCID 5, the DRB 2 of the remote UE 2 corresponds to the LCID 6, the SRB 1 of the remote UE 2 corresponds to the LCID 3, and the SRB 2 of the remote UE 2 corresponds to the LCID 4. After the CU establishes the mapping relationship among the three identifiers, the DRB 3 of the relay UE provides a forwarding service for data packets transmitted on the DRB 1 and the DRB 2 of the remote UE 2, and the SRB 2 of the relay UE 2 provides a forwarding service for RRC messages transmitted on the SRB 1 and the SRB 2 of the remote UE 2.

The UE context modification request message may be encapsulated in a CU-DU interface message and sent to the DU. For example, in a 5G system, the UE context modification request message may be encapsulated in an F1 message, and sent by the CU to the DU through an F1 interface between the CU and the DU. For example, the F1 message in which the UE context modification request message is encapsulated may carry the identifier of the relay UE on the CU-DU interface, including a CU side identifier of the F1 interface allocated by the CU to the relay UE and a DU side identifier of the F1 interface allocated by the DU to the relay UE. The DU and the CU may identify the UE context modification request message by using the identifier of the relay UE on the F1 interface.

In addition, the UE context modification request message further carries quality of service (Quality of Service, QoS) information of a modified or added DRB, and QoS information of a logical channel corresponding to the modified or added DRB, so that the DU configures a resource pool of the PC5 interface for the remote UE.

Step 602: The CU sends the UE context modification request message to the DU.

Step 603: The DU generates RRC configuration information of the relay UE based on the identifier of the remote UE, the bearer identifier of the relay UE, and the identifier of the logical channel, where the RRC configuration information includes a mapping relationship among the identifier of the remote UE, the bearer identifier of the relay UE, and the identifier of the logical channel.

After receiving the UE context modification request message, the DU determines that the context of the relay UE needs to be modified, and generates the RRC configuration information of the relay UE based on the information carried in the UE context modification request message, so that the RRC configuration information of the relay UE includes the identifier of the remote UE and the mapping relationship between the bearer identifier of the relay UE and the identifier of the logical channel between the relay UE and the remote UE. Alternatively, in the foregoing step 601, if the CU further includes the bearer identifier of the remote UE in the UE context modification request message, the RRC configuration information generated by the DU for the relay UE may further include the mapping relationship among the bearer identifier of the relay UE, the bearer identifier of the remote UE, and the identifier of the logical channel between the relay UE and the remote UE. For example, the RRC configuration information may be specifically cell group configuration (Cell Group Config) information.

For example, the remote UE 2 is used as an example. In the RRC configuration information of the relay UE generated by the DU, the mapping relationship among the bearer identifier of the relay UE, the bearer identifier of the remote UE 2, and the identifier of the logical channel between the relay UE and the remote UE 2 may be as shown in Table 1 below.

**Table 1**

| Bearer identifier of relay UE | Bearer identifier of remote UE 2 | Identifier of a logical channel |
|---|---|---|
| DRB 3 | DRB 1 | LCID 5 |
| | DRB 2 | LCID 6 |
| SRB 2 | SRB 1 | LCID 3 |
| | SRB 2 | LCID 4 |

It may be understood that, the DRB 3 of the relay UE is a DRB requested by the CU to be added. In this case, when generating the configuration information of the relay UE, the DU further needs to allocate a DU side TEID of a GTP-U tunnel corresponding to the added DRB 3 of the relay UE. The DU side TEID is carried in a UE context modification response (UE context modification response) message and fed back to the CU, to complete establishment of the GTP-U tunnel corresponding to the DRB 3 of the relay UE.

In addition, the RRC configuration information of the relay UE may further include resource pool information that is of the PC5 interface between the remote UE and the relay UE and that is configured by the DU. For example, a configuration of a resource pool may include a sidelink discontinuous transmission configuration (sl-DiscConfig), a sidelink common configuration (sl-CommonConfig), a sidelink vehicle-to-everything dedicated configuration (sl-V2X-ConfigDedicated), and vehicle-to-everything mobility control information (mobilityControlInfo V2X).

In the foregoing step 601, if the UE context modification request message carries the bearer identifier of the remote UE and the identifier of the logical channel between the remote UE and the relay UE that have the mapping relationship, the DU may further generate, in a process of modifying the context of the relay UE, the RRC configuration information for the remote UE, that is, generate cell group configuration information for the remote UE. For example, the DU generates the RRC configuration information of the remote UE based on the identifier of the remote UE, the bearer identifier of the remote UE, and the identifier of the logical channel. The RRC configuration information of the remote UE includes the mapping relationship between the bearer identifier of the remote UE and the identifier of the logical channel and bottom-layer information configured by the DU for the remote UE, and may further include an identifier of the relay UE.

In this example, although the DU and the CU do not need to set up a context for the remote UE on the CU-DU interface, the DU needs to provide a bottom-layer configuration for the remote UE. For example, the DU needs to allocate an identifier such as a C-RNTI, a local ID, or an SL-RNTI to the remote UE, and configure the resource pool of the PC5 interface between the remote UE and the relay UE.

Step 604: The DU sends the UE context modification response message to the CU, where the UE context modification response message carries the RRC configuration information.

After finishing modifying the context of the relay and generating the RRC configuration information of the relay UE, the DU may include the RRC configuration information of the relay UE in the UE context modification response message and feed back the UE context modification response message to the CU, so that the CU generates an RRC reconfiguration message that can be sent to the relay UE.

In an example, if the DU further generates the RRC configuration information for the remote UE, the DU may add an information element (for example, CellGroupConfig-for remote UE) to the UE context modification response message, to carry a cell group configuration for the remote UE, so that the DU may send the RRC configuration information of the relay UE and the RRC configuration information of the remote UE to the CU by using the UE context modification response message.

It may be understood that the UE context modification response message is also encapsulated in a CU-DU interface message (for example, an F1 message in the 5G system), and is sent to the CU through the CU-DU interface between the DU and the CU based on the identifier of the relay UE on the CU-DU interface.

Step 605: The CU generates the RRC reconfiguration message.

In this example, the UE context modification response message carries the RRC configuration information of the relay UE and the RRC configuration information of the remote UE. The CU generates the RRC reconfiguration message for the relay UE based on the RRC configuration information of the relay UE, and generates the RRC reconfiguration message for the remote UE based on the RRC configuration information of the remote UE.

Step 606: The CU sends the RRC reconfiguration message.

The CU sends the RRC reconfiguration message of the relay UE to the relay UE through the DU, and forwards the RRC reconfiguration message of the remote UE to the remote UE through the DU and the relay UE.

When an RRC message is transmitted between the CU and the DU, the RRC message is encapsulated in a downlink RRC information transfer (DL RRC message transfer) message or an uplink RRC information transfer (UL RRC message transfer) message for transmission. For example, the RRC message refers to a message related to RRC control, for example, an RRC connection request message, an RRC connection setup message, an RRC resume request message, an RRC resume message, an RRC security mode complete message, an RRC reconfiguration message, an RRC connection complete message, and an RRC re-establishment message.

An information element structure of the downlink RRC information transfer message and the uplink RRC information transfer message usually includes: an identifier of UE on a CU-DU interface, an SRB identifier, and an RRC container (RRC-container). The identifier of the UE on the CU-DU interface may include a CU side identifier and a DU side identifier on the CU-DU interface, and is used for the CU and the DU to identify UE to which a message belongs. The CU-DU interface is equivalent to a channel that is established for the UE and that is for transmitting an RRC message between the CU and the DU. The RRC container is used to carry a specific RRC message, and the SRB identifier is used to indicate the DU to send the RRC message to the UE through a logical channel corresponding to the SRB identifier (a logical channel between the DU and the CU and the UE), or is used for the CU to send the RRC message to a PDCP entity corresponding to the SRB identifier.

When the CU sends the RRC reconfiguration message of the relay UE to the relay UE, the CU needs to encapsulate a PDCP layer outside the RRC reconfiguration message of the relay UE, to obtain downlink RRC information of the relay UE. For example, if the adaptation layer is deployed in a protocol stack between the CU and the relay UE based on the foregoing solution 2, the CU further needs to continue to encapsulate adaptation information outside the PDCP layer. The adaptation information may include the identifier of the relay UE, and is used to indicate that the RRC reconfiguration message belongs to the relay UE. Then the CU includes the obtained downlink RRC information in the RRC container of the downlink RRC information transfer message and sends the RRC container to the DU. An identifier on the CU-DU interface carried in the downlink RRC information transfer message is the identifier of the relay UE on the CU-DU interface.

After obtaining the downlink RRC information of the relay UE, the DU continues to encapsulate an RLC layer, a MAC layer, and a PHY layer for a downlink RRC message of the relay UE. That is, if the adaptation information is encapsulated in the downlink RRC information, the DU encapsulates the RLC layer, the MAC layer, and the PHY layer outside the adaptation information. If the adaptation information is not encapsulated in the downlink RRC information, the DU encapsulates the RLC layer, the MAC layer, and the PHY layer outside the PDCP layer.

The DU sends, through a logical channel corresponding to an SRB 1 of the relay UE, the downlink RRC information encapsulated with the RRC reconfiguration message of the relay UE to the relay UE. After obtaining the RRC reconfiguration message of the relay UE from the downlink RRC information, the relay UE may learn of, according to an indication of the RRC reconfiguration message, a mapping relationship between a bearer identifier of the relay UE and an identifier of a logical channel between the relay UE and the remote UE 2, or a mapping relationship among the bearer identifier of the relay UE, a bearer identifier of the remote UE 2, and an identifier of a logical channel between the relay UE and the remote UE 2. In addition, when subsequently providing a relay service for the remote UE 2, the relay UE forwards a data packet and an RRC message between the remote UE 2 and the CU based on the learned mapping relationship.

The remote UE 2 is used as an example. When the CU sends an RRC reconfiguration message of the remote UE 2 to the remote UE, the CU encapsulates a PDCP layer and adaptation information for the RRC reconfiguration message of the remote UE 2 (to be specific, the PDCP layer is encapsulated outside the RRC reconfiguration message, and the adaptation information is encapsulated outside the PDCP layer), to obtain downlink RRC information of the remote UE 2. For example, the adaptation information is used to indicate that the currently transmitted RRC reconfiguration message is the RRC reconfiguration message of the remote UE 2. The adaptation information may include an identifier of the remote UE 2 and the identifier (it is assumed that the identifier is an LCID 4) of the logical channel between the remote UE 2 and the relay UE. Alternatively, if the configuration information generated by the DU for the relay UE in the foregoing step 603 includes the mapping relationship among the bearer identifier of the relay UE, the bearer identifier of the remote UE 2, and the identifier of the logical channel between the relay UE and the remote UE 2, the adaptation information may further include an identifier of the remote UE 2 and an identifier of an SRB of the remote UE 2 (it is assumed that the identifier is an identifier of an SRB 2 of the remote UE 2). Then the CU includes the downlink RRC information of the remote UE 2 in the RRC container of the downlink RRC information transfer message and sends the RRC container to the DU. The CU and the DU do not set up a context for the remote UE 2, and the remote UE 2 does not have an identifier on the CU-DU interface. Therefore, when the RRC reconfiguration message of the remote UE is sent, an identifier on the CU-DU interface carried in the used downlink RRC information transfer message is still the identifier of the relay UE on the CU-DU interface.

If the adaptation layer is deployed in the protocol stack between the relay UE and the CU based on the foregoing solution 1, to enable the relay UE to learn that the adaptation information is encapsulated outside the downlink RRC message of the remote UE, the CU may add a first indication to the downlink RRC information transfer message in which the downlink RRC information of the remote UE 2 is encapsulated, to indicate that the adaptation information is encapsulated outside the downlink RRC message of the remote UE 2. For example, the first indication may be an adaptation layer indication (adaptation layer indication), or may be a relay indication (relay indication). In this application, the first indication is carried in an interaction message (for example, an uplink/downlink RRC information transfer message or an uplink/downlink GTP-U frame) between the CU and the DU, to indicate that the adaptation information is encapsulated outside the currently transmitted RRC message or data packet.

In this case, after the DU obtains the downlink RRC information of the remote UE 2 sent by the CU, when encapsulating the PHY layer, the MAC layer, and the RLC layer for the downlink RRC information of the remote UE 2, the DU may add a third indication to the PHY layer, the MAC layer, or the RLC layer according to the first indication carried in the downlink RRC information transfer message. Finally, the DU sends the encapsulated downlink RRC information of the remote UE 2 to the relay UE. That is, the downlink RRC information sent by the DU to the relay UE includes the RRC reconfiguration message of the remote UE 2, the PDCP layer encapsulated outside the RRC reconfiguration message, the adaptation information encapsulated outside the PDCP layer, the RLC layer encapsulated outside the adaptation information, the MAC layer encapsulated outside the RLC layer, and the PHY layer encapsulated outside the MAC layer.

In this application, the third indication is an indication added by the relay UE or the DU to the PHY layer, the MAC layer, or the RLC layer, and is used to indicate that adaptation information is encapsulated outside the currently transmitted RRC message or data packet.

After receiving the downlink RRC information of the remote UE 2 sent by the DU, the relay UE obtains the third indication in a process of deleting the PHY layer, the MAC layer, and the RLC layer of the downlink RRC information. Therefore, the relay UE may determine, according to the third indication, that the downlink RRC information includes the adaptation information. In this case, after deleting the PHY layer, the MAC layer, and the RLC layer of the downlink RRC information, the relay UE reads the adaptation information, and determines that the RRC message encapsulated in the downlink RRC information is the RRC reconfiguration message of the remote UE 2.

For example, if the adaptation information carries the identifier of the remote UE 2 and the LCID 4, the relay UE sends the downlink RRC information to the remote UE 2 through the logical channel LCID 4. If the adaptation information carries the identifier of the remote UE 2 and the identifier of the SRB 2 of the remote UE 2, the relay UE determines, based on the mapping relationship that is indicated by the previously received RRC reconfiguration message of the relay UE and that is shown in Table 1, to send the downlink RRC information to the remote UE 2 through the logical channel LCID 4.

It can be learned from the protocol stack shown in FIG. 4 that, the downlink RRC information received by the relay UE from the DU includes a PHY layer, a MAC layer, and an RLC layer on a Uu interface between the relay UE and the DU. In this case, when sending the downlink RRC information to the remote UE 2, the relay UE needs to delete the PHY layer, the MAC layer, and the RLC layer on the Uu interface, and re-encapsulate a PHY layer, a MAC layer, and an RLC layer of a PC5 interface between the relay UE and the remote UE 2.

It may be understood that, if the adaptation layer is deployed in the protocol stack between the relay UE and the CU based on the foregoing solution 2, the CU does not need to add the first indication to the downlink RRC information transfer message that carries the downlink RRC information of the remote UE 2. Therefore, the DU does not need to add the third indication to the PHY layer, the MAC layer, or the RLC layer in the downlink RRC information. When receiving any piece of downlink RRC information, the relay UE reads adaptation information in the downlink RRC information, determines UE to which a received downlink RRC message encapsulated in the downlink RRC information belongs, and forwards the downlink RRC information based on the adaptation information.

In this way, it may be considered that a process in which the remote UE 2 requests, through the relay UE, the base station in the CU-DU architecture to set up the RRC connection, resume the RRC connection, or re-establish the RRC connection is completed. Afterwards, the remote UE 2 may perform subsequent information exchange with the CU through the relay UE.

The remote UE 2 is still used as an example. In a subsequent information exchange process, when the remote UE 2 sends an uplink RRC message to the CU, the remote UE 2 encapsulates the PDCP layer and the RLC layer, the MAC layer, and the PHY layer on the PC5 interface for the uplink RRC message, and sends obtained uplink RRC information to the relay UE through the PC5 interface. It is assumed that the remote UE 2 sends the uplink RRC information to the relay UE through the logical channel LCID 4. After deleting the RLC layer, the MAC layer, and the PHY layer on the PC5 interface in the uplink RRC information, the relay UE sequentially encapsulates the adaptation information and the RLC layer, the MAC layer, and the PHY layer on the Uu interface outside the PDCP layer in the uplink RRC information. The adaptation information may carry the identifier of the remote UE 2 and the LCID 4. Then the relay UE determines, based on the mapping relationship shown in Table 1, that the bearer identifier of the relay UE corresponding to the logical channel LCID 4 is the SRB 1 of the relay UE. The relay UE sends the uplink RRC information to the DU through a logical channel that is between the relay UE and the DU and that corresponds to the SRB 1 of the relay UE.

Alternatively, the relay UE determines, based on the mapping relationship shown in Table 1, the bearer identifier of the relay UE (namely, the SRB 1 of the relay UE) and the bearer identifier of the remote UE 2 (namely, the SRB 2 of the remote UE 2) that correspond to the logical channel LCID 4. The relay UE includes the identifier of the remote UE 2 and the identifier of the SRB 2 of the remote UE 2 in the adaptation information. Then the relay UE sends the uplink RRC information to the DU through the logical channel that is between the relay UE and the DU and that corresponds to the SRB 1 of the relay UE.

If the adaptation layer is deployed in the protocol stack between the relay UE and the CU based on the foregoing solution 1, to enable the CU to learn that the adaptation information is encapsulated in the uplink RRC information, the relay UE may send the uplink RRC information to the DU, and add the third indication to the RLC layer, the MAC layer, or the PHY layer, to indicate that the adaptation information is encapsulated outside the uplink RRC message, so that the CU reads the adaptation information when receiving the uplink RRC information, to determine that the uplink RRC message in the uplink RRC information belongs to the remote UE 2.

After receiving the uplink RRC information, the DU deletes the PHY layer, the MAC layer, and the RLC layer of the uplink RRC information. Then, the DU includes, according to the third indication, the first indication in the uplink RRC information transfer message to be sent to the CU, and includes the uplink RRC message and the PDCP layer and the adaptation information encapsulated outside the uplink RRC message in the RRC container of the uplink RRC information transfer message. Finally, the DU sends the uplink RRC information transfer message to the CU. Optionally, the uplink RRC information transfer message further carries the identifier of the relay UE on the CU-DU interface.

After receiving the uplink RRC information, the CU reads, according to the first indication carried in the uplink RRC information transfer message, the adaptation information of the uplink RRC information. For example, if the adaptation information carries the identifier of the remote UE 2 and the LCID 4, the CU determines that an SRB of the remote UE 2 corresponding to the LCID 4 is the SRB 2 of the remote UE 2. Then the CU sends the uplink RRC information to a PDCP entity corresponding to the SRB 2 of the remote UE 2. If the adaptation information carries the identifier of the remote UE 2 and the identifier of the SRB 2 of the remote UE 2, the CU may directly send the uplink RRC information to the PDCP entity corresponding to the SRB 2 of the remote UE 2.

It may be understood that, if the adaptation layer is deployed in the protocol stack between the relay UE and the CU based on the foregoing solution 2, the relay UE does not need to add the third indication to the PHY layer, the MAC layer, or the RLC layer when sending the uplink RRC message of the remote UE. Therefore, the DU does not need to add the first indication to the uplink RRC information transfer message that carries the uplink RRC message. When receiving any piece of uplink RRC information, the CU reads adaptation information in the uplink RRC information, determines UE to which the received uplink RRC message encapsulated in the uplink RRC information belongs, and sends, based on the adaptation information, the uplink RRC message to the PDCP entity corresponding to the SRB of the UE. In this case, when the relay UE sends the uplink RRC message of the relay UE, the encapsulated adaptation information may include the identifier of the relay UE.

When the CU sends the downlink RRC message to the remote UE 2, for a specific process, refer to the foregoing process in which the CU sends the RRC reconfiguration message of the remote UE 2 to the remote UE 2. Details are not described herein again.

For a user plane data transmission process between the remote UE 2 and the CU, when the remote UE 2 sends an uplink data packet to the CU, the remote UE 2 encapsulates the PDCP layer and the RLC layer, the MAC layer, and the PHY layer on the PC5 interface for the uplink data packet, and sends obtained uplink data information to the relay UE. It is assumed that the remote UE 2 sends the uplink data information to the relay UE through the logical channel LCID 5. After deleting the RLC layer, the MAC layer, and the PHY layer on the PC5 interface in the uplink data information, the relay UE sequentially encapsulates the adaptation information and the RLC layer, the MAC layer, and the PHY layer on the Uu interface outside the PDCP layer in the uplink data information. The adaptation information is used to indicate that the uplink data packet in the uplink data information belongs to the remote UE 2, and the adaptation information may carry the identifier of the remote UE 2 and the LCID 5. Then the relay UE determines, based on the mapping relationship shown in Table 1, that the bearer identifier of the relay UE corresponding to the logical channel LCID 5 is a DRB 3 of the relay UE. The relay UE sends the uplink data information to the DU through a logical channel that is between the relay UE and the DU and that corresponds to the DRB 3 of the relay UE.

Alternatively, the relay UE determines, based on the mapping relationship shown in Table 1, the bearer identifier of the relay UE (namely, the DRB 3 of the relay UE) and the bearer identifier of the remote UE 2 (namely, a DRB 1 of the remote UE 2) that correspond to the logical channel LCID 5. The relay UE includes the identifier of the remote UE 2 and an identifier of the DRB 1 of the remote UE 2 in the adaptation information. Then the relay UE sends the uplink data information to the DU through a logical channel that is between the relay UE and the DU and that corresponds to the DRB 3 of the relay UE.

If the adaptation layer is deployed in the protocol stack between the relay UE and the CU based on the foregoing solution 1, to enable the CU to learn that the adaptation information is encapsulated in the uplink data information, the relay UE may send the uplink data information to the DU, and add the third indication to the RLC layer, the MAC layer, or the PHY layer, to indicate that the uplink data information includes the adaptation information, so that the CU reads the adaptation information when receiving the uplink data information, to determine that the uplink data packet encapsulated in the uplink data information belongs to the remote UE 2.

After receiving the uplink data information, the DU deletes the PHY layer, the MAC layer, and the RLC layer of the uplink data information. Then the DU includes the remaining uplink data packet and the PDCP layer and the adaptation information encapsulated outside the uplink data packet in an uplink GTP-U frame and sends the uplink GTP-U frame to the CU. In this example, the CU and the DU do not set up a context for the remote UE 2, that is, the remote UE 2 does not have a GTP-U tunnel resource. Therefore, the DU needs to encapsulate the uplink data information in an uplink GTP-U frame of a GTP-U tunnel corresponding to the DRB 3 of the relay UE. That is, the uplink GTP-U frame carries tunnel endpoint information of the GTP-U tunnel corresponding to the DRB 3 of the relay UE.

In this example, the DU further needs to add the first indication to the uplink GTP-U frame according to the third indication carried in the PHY layer, the MAC layer, or the RLC layer of the uplink data information, to indicate to the CU that the uplink data information includes the adaptation information.

After receiving the uplink data information, the CU reads, according to the first indication carried in the uplink GTP-U frame, the adaptation information of the uplink data information. For example, if the adaptation information carries the identifier of the remote UE 2 and the LCID 5, the CU determines that a DRB of the remote UE 2 corresponding to the LCID 5 is the DRB 1 of the remote UE 2. Then the CU sends the uplink data information to a PDCP entity corresponding to the DRB 1 of the remote UE 2. If the adaptation information carries the identifier of the remote UE 2 and the identifier of the DRB 1 of the remote UE 2, the CU may directly send the uplink data information to the PDCP entity corresponding to the DRB 1 of the remote UE 2.

It may be understood that, if the adaptation layer is deployed in the protocol stack between the relay UE and the CU based on the foregoing solution 2, the relay UE does not need to add the first indication to the PHY layer, the MAC layer, or the RLC layer when sending the uplink data information of the remote UE. Therefore, the DU does not need to add the first indication to the uplink GTP-U frame that carries the uplink data information. When receiving any piece of uplink data information, the CU reads adaptation information in the uplink data information, determines UE to which the received uplink data packet in the uplink data information belongs, and sends, based on the adaptation information, the uplink data packet to the PDCP entity corresponding to the DRB of the UE. In this case, when the relay UE sends the uplink data packet of the relay UE, the encapsulated adaptation information may include the identifier of the relay UE.

When the CU sends a downlink data packet to the remote UE 2, the CU encapsulates a PDCP layer and adaptation information for the downlink data packet, to obtain downlink data information of the remote UE 2. For example, the adaptation information includes the identifier of the remote UE 2 and the identifier (it is assumed that the identifier is the LCID 5) of the logical channel between the remote UE 2 and the relay UE. Alternatively, if the configuration information generated by the DU for the relay UE in the foregoing step 603 includes the mapping relationship among the bearer identifier of the relay UE, the bearer identifier of the remote UE 2, and the identifier of the logical channel between the relay UE and the remote UE 2, the adaptation information may further include the identifier of the remote UE 2 and the identifier of the DRB of the remote UE 2 (it is assumed that the identifier is the identifier of the DRB 1 of the remote UE 2). Then the CU includes the downlink data information of the remote UE 2 in a downlink GTP-U frame and sends the downlink GTP-U frame to the DU. In this example, because the remote UE 2 does not have a GTP-U tunnel resource, the CU needs to determine the LCID 5, or the identifier of the DBR of the relay UE corresponding to the LCID 5 and the identifier of the DRB 1 of the remote UE 2, that is, the identifier of the DRB 3 of the relay UE. Then the downlink data information is encapsulated in a downlink GTP-U frame of a GTP-U tunnel corresponding to the DRB 3 of the relay UE and sent to the DU. That is, the downlink GTP-U frame carries tunnel endpoint information of the GTP-U tunnel corresponding to the DRB 3 of the relay UE.

If the adaptation layer is deployed in the protocol stack between the relay UE and the CU based on the foregoing solution 1, to enable the relay UE to learn that the adaptation information is encapsulated outside the downlink data packet of the remote UE 2, the CU may include the first indication in the downlink GTP-U frame, to indicate that the adaptation information is encapsulated outside the downlink data packet of the remote UE 2, so that the relay UE reads the adaptation information and performs a corresponding forwarding operation. For example, the CU may add the first indication to a frame header of a downlink GTP-U frame whose type is downlink user data (DL user data).

After receiving the downlink GTP-U frame, the DU obtains the downlink data information generated by the CU for the remote UE 2. Then the DU encapsulates the PHY layer, the MAC layer, and the RLC layer for the downlink data information, and adds a third indication to the PHY layer, the MAC layer, or the RLC layer according to the first indication carried in the downlink GTP-U frame. Finally, the DU sends the encapsulated downlink data information to the relay UE.

After receiving the downlink data information sent by the DU, the relay UE deletes the PHY layer, the MAC layer, and the RLC layer that are encapsulated by the DU on the Uu interface and that are in the downlink data information, and determines, according to the third indication, that the adaptation information exists in the downlink data information. The relay UE reads the adaptation information, to determine that the downlink data packet encapsulated in the downlink data information is the downlink data packet of the remote UE 2.

For example, if the adaptation information carries the identifier of the remote UE 2 and the LCID 5, after the relay UE deletes the adaptation information and sequentially encapsulates the PHY layer, the MAC layer, and the RLC layer of the PC5 interface outside the PDCP layer in the downlink data information, the relay UE sends the downlink data information to the remote UE 2 through the logical channel LCID 5 between the remote UE and the relay UE. If the adaptation information carries the identifier of the remote UE 2 and the identifier of the DRB 1 of the remote UE 2, the relay UE determines, based on the mapping relationship that is indicated by using the previously received RRC reconfiguration message of the relay UE and that is shown in Table 1, to send the downlink data information to the remote UE 2 through the logical channel LCID 5 between the remote UE 2 and the relay UE.

It may be understood that, if the adaptation layer is deployed in the protocol stack between the relay UE and the CU based on the foregoing solution 2, the CU does not need to add the first indication to the downlink GTP-U frame that carries the downlink data packet of the remote UE 2. Therefore, the DU also needs to add the third indication to the RLC layer, the MAC layer, or the PHY layer of the downlink data packet. When receiving any piece of downlink data information, the relay UE reads adaptation information in the downlink data information, determines UE to which the received downlink data packet encapsulated in the downlink data information belongs, and forwards the downlink data information based on the adaptation information. In this case, if the CU sends the downlink data packet of the relay UE to the relay UE, the encapsulated adaptation information may carry the identifier of the relay UE.

The communication method provided in this application is described above, to implement the UE-to-network relay communication process based on the CU-DU architecture when the adaptation layer is deployed in the protocol stack of the CU.

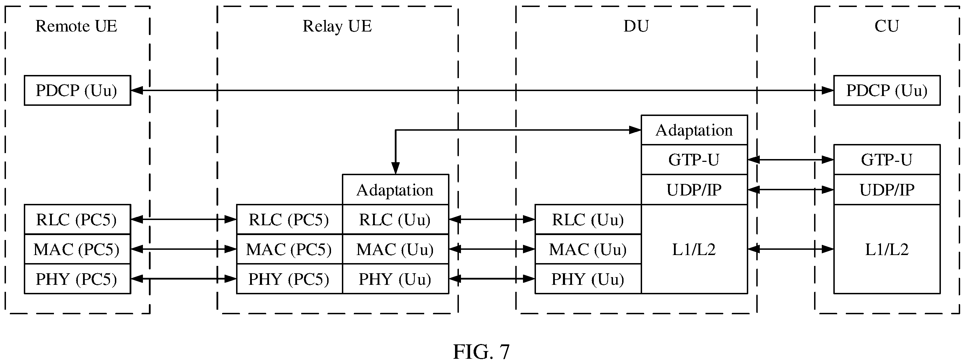

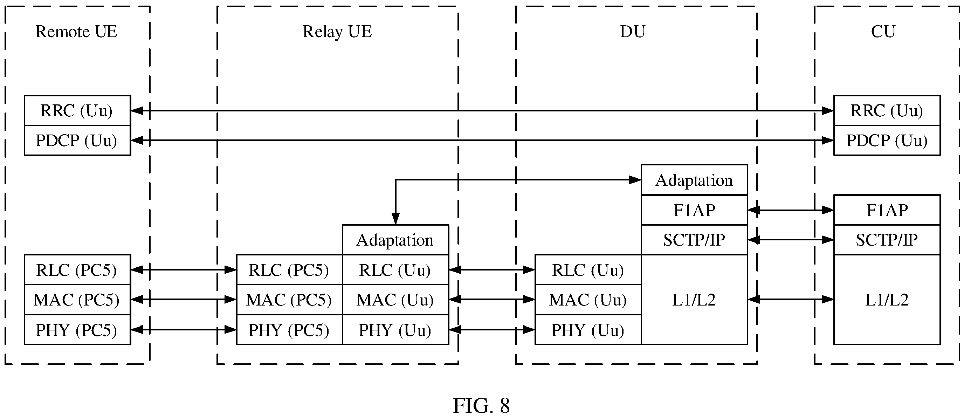

For a manner in which an adaptation layer is deployed in a protocol stack of a DU, for example, a user plane protocol stack shown in FIG. 7 and a control plane protocol stack shown in FIG. 8 are used as examples to describe a UE-to-network relay communication principle when the adaptation layer is deployed in the protocol stack of the DU.

FIG. 7 shows a possible user plane protocol stack between remote UE 2, relay UE, a CU, and a DU in a UE-to-network relay communication system. Compared with the user plane protocol stack shown in FIG. 3, in the user plane protocol stack shown in FIG. 7, the adaptation layer is deployed in a protocol stack of the DU.

FIG. 8 shows a possible control plane protocol stack between remote UE 2, relay UE, a CU, and a DU in a UE-to-network relay communication system. Compared with the control plane protocol stack shown in FIG. 4, in the control plane protocol stack shown in FIG. 8, the adaptation layer is deployed in a protocol stack of the DU.

For example, for solutions to setting the adaptation layer in the protocol stack between the relay UE and the DU, this application provides two solutions, including the following solution 3 and solution 4.

Solution 3: The protocol stack between the DU and the relay UE does not include the adaptation layer when the data packet/RRC message of the relay UE is transmitted, and the protocol stack between the DU and the relay UE includes the adaptation layer only when the data packet/RRC message of the remote UE is transmitted. In other words, in uplink, when the relay UE sends an uplink data packet/uplink RRC message, if an uplink data packet/uplink RRC message of the relay UE is sent, the relay UE does not need to encapsulate adaptation information for the uplink data packet/uplink RRC message; if an uplink data packet/uplink RRC message of the remote UE is sent, the relay UE needs to encapsulate adaptation information for the uplink data packet/uplink RRC message, to indicate to the DU that the uplink data packet/uplink RRC message belongs to the remote UE. Similarly, in downlink, when the DU sends a downlink data packet/downlink RRC message, if a downlink data packet/downlink RRC message of the relay UE is sent, the DU does not need to encapsulate adaptation information for the downlink data packet/downlink RRC message; if a downlink data packet/downlink RRC message of the remote UE is sent, the DU needs to encapsulate adaptation information for the downlink data packet/downlink RRC message, to indicate to the relay UE that the downlink data packet/downlink RRC message belongs to the remote UE. Since the adaptation layer may or may not exist, it is necessary for each of the relay and a base station to indicate, when each data packet/RRC message is sent, to the other whether the adaptation layer exists.

Solution 4: The protocol stack between the DU and the relay UE always includes the adaptation layer. In uplink, regardless of whether the relay UE sends the data packet/RRC message of the relay UE or forwards the data packet/RRC message of the remote UE, the relay UE encapsulates the adaptation information for the sent data packet/RRC message, so that the DU learns whether the data packet/RRC message sent by the relay UE belongs to the remote UE or the relay UE. In downlink, regardless of whether the DU sends the data packet/RRC message to the remote UE through the relay UE, or directly sends the data packet/RRC message to the relay UE, the DU encapsulates configuration information for the sent data packet/RRC message, so that the relay UE learns whether the data packet/RRC message delivered by the DU is sent to the relay UE or the remote UE. For the solution 4, since the adaptation layer always exists, each of the relay and the base station does not need to indicate, when each data packet/RRC message is sent, to the other whether the adaptation layer exists.

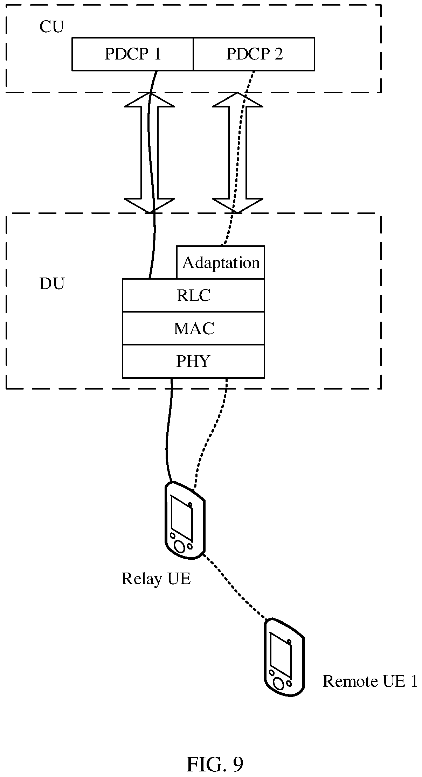

In this case, based on the protocol stacks shown in FIG. 7 and FIG. 8, in the CU-DU architecture, because the adaptation layer is deployed in the protocol stack of the DU, before sending, to the CU, the data packet/RRC message sent by the relay UE, the DU needs to determine whether the data packet/RRC message belongs to the relay UE or the remote UE. FIG. 9 is a schematic diagram of a UE-to-network relay communication principle based on the protocol stacks shown in FIG. 7 and FIG. 8. If the data packet/RRC message belongs to the relay UE (for a communication route, refer to a solid line shown in FIG. 9), for a data packet, the DU sends the data packet to the CU through the GTP-U tunnel of the relay UE, and the CU transmits the data packet to a PDCP entity corresponding to a DRB of the relay UE. For the RRC message, the DU sends the RRC message to the CU by using an identifier of the relay UE on a CU-DU interface, and the CU transmits the RRC message to a PDCP entity of the relay UE. If the data packet/RRC message belongs to a remote UE 1 (for a communication route, refer to a dashed line shown in FIG. 9). For the data packet, if the DU determines, based on adaptation information of the adaptation layer, that the data packet is a data packet of a DRB of the remote UE 1, the DU sends the data packet to the CU through a GTP-U tunnel corresponding to the DRB of the remote UE 1, and the CU transmits the data packet to a PDCP entity corresponding to the DRB of the remote UE 1. For the RRC message, if the DU determines, based on the adaptation information of the adaptation layer, that the RRC message is a data packet of an SRB of the remote UE 1, the DU sends the RRC message to the CU by using an identifier of the remote UE 1 on the CU-DU interface, and the CU transmits the RRC message to a PDCP entity corresponding to the SRB of the remote UE 1.

It can be learned from the foregoing communication principle that, if the adaptation layer is deployed on the DU side, when one remote UE requests to set up an RRC connection, or requests to resume an RRC connection, or requests to re-establish an RRC connection to the CU and the DU through relay UE, the CU and the DU need to set up a context for the remote UE, and need to modify a context of the relay UE, so that the relay UE can provide a relay service for the remote UE.

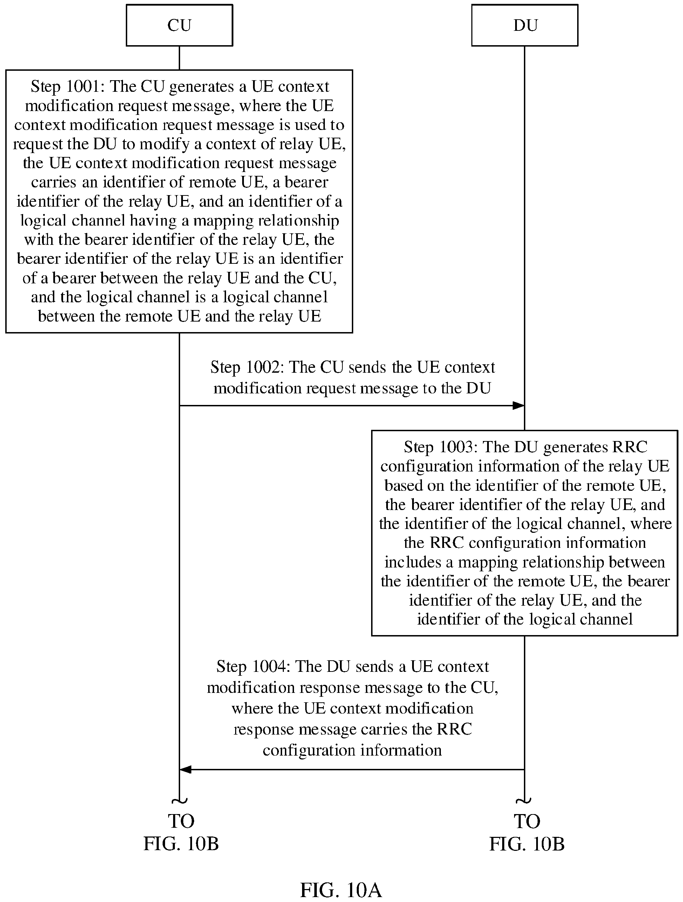

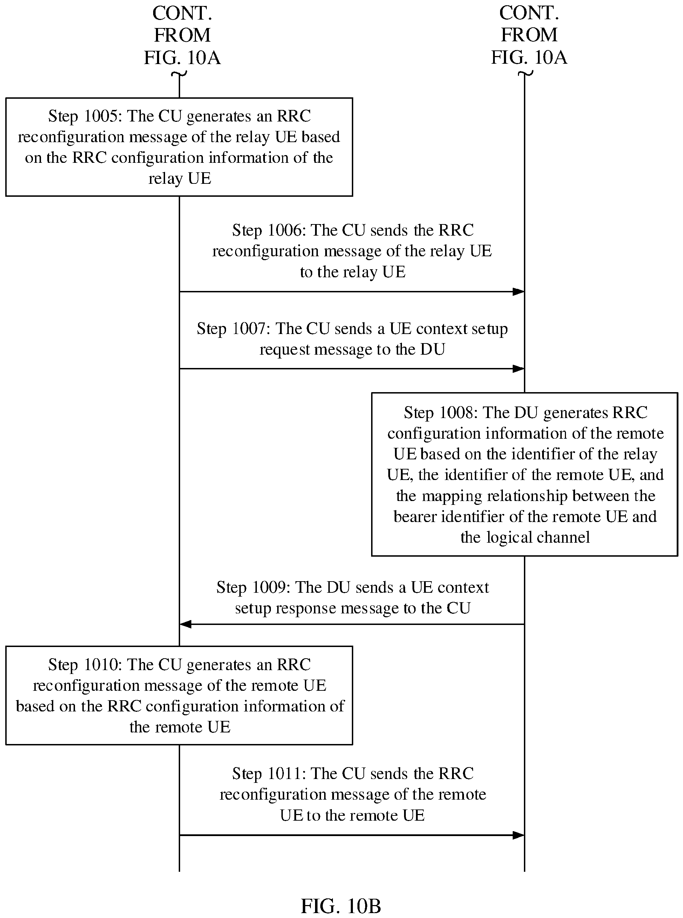

For example, FIG. 10A and FIG. 10B are a flowchart of an embodiment of a communication method according to this application. FIG. 10A and FIG. 10B mainly describe a UE-to-network relay communication process when an adaptation layer is deployed on a DU side. The method includes the following steps.

Step 1001: A CU generates a UE context modification request message, where the UE context modification request message is used to request a DU to modify a context of relay UE, the UE context modification request message carries an identifier of remote UE, a bearer identifier of the relay UE, and an identifier of a logical channel having a mapping relationship with the bearer identifier of the relay UE, the bearer identifier of the relay UE is an identifier of a bearer between the relay UE and the CU, and the logical channel is a logical channel between the remote UE and the relay UE.

Step 1002: The CU sends the UE context modification request message to the DU.

Step 1003: The DU generates RRC configuration information of the relay UE based on the identifier of the remote UE, the bearer identifier of the relay UE, and the identifier of the logical channel, where the RRC configuration information of the relay UE includes a mapping relationship among the identifier of the remote UE, the bearer identifier of the relay UE, and the identifier of the logical channel.

Step 1004: The DU sends a UE context modification response message to the CU, where the UE context modification response message carries the RRC configuration information of the relay UE.

For example, for a specific implementation of steps 1001 to 1004, refer to a process of modifying the context of the relay UE and generating the RRC configuration information by the CU and the DU in steps 601 to 604. Details are not described herein again.

Step 1005: The CU generates an RRC reconfiguration message of the relay UE based on the RRC configuration information of the relay UE.

Step 1006: The CU sends the RRC reconfiguration message of the relay UE to the relay UE.

In this example, when the CU sends the RRC reconfiguration message of the relay UE to the relay UE, the CU needs to encapsulate a PDCP layer outside the RRC reconfiguration message of the relay UE, to obtain downlink RRC information of the relay UE. Then the CU includes the obtained downlink RRC information in an RRC container of a downlink RRC information transfer message and sends the RRC container to the DU. For example, an identifier on a CU-DU interface carried in the downlink RRC information transfer message is an identifier of the relay UE on the CU-DU interface.

If the adaptation layer is deployed in the protocol stack between the relay UE and the DU based on the foregoing solution 3, after obtaining the downlink RRC information of the relay UE sent by the CU, the DU may sequentially encapsulate an RLC layer, a MAC layer, and a PHY layer outside the PDCP layer in the downlink RRC information.

If the adaptation layer is deployed in the protocol stack between the relay UE and the DU based on the foregoing solution 4, after obtaining the downlink RRC information of the relay UE sent by the CU, the DU may sequentially encapsulate adaptation information, the RLC layer, the MAC layer, and the PHY layer outside the PDCP layer in the downlink RRC information. In this case, the adaptation information may include the identifier of the relay UE, and is used to indicate that the RRC reconfiguration message encapsulated in the downlink RRC information belongs to the relay UE.

The DU sends the encapsulated downlink RRC information to the relay UE through a logical channel (a logical channel between the relay UE and the CU) corresponding to an SRB 1 of the relay UE. After obtaining the RRC reconfiguration message of the relay UE from the downlink RRC information, the relay UE may learn of, according to an indication of the RRC reconfiguration message, a mapping relationship between the bearer identifier of the relay UE and an identifier of a logical channel between the relay UE and the remote UE 2, or a mapping relationship among the bearer identifier of the relay UE, a bearer identifier of the remote UE 2, and an identifier of a logical channel between the relay UE and the remote UE 2. In addition, when subsequently providing a relay service for the remote UE 2, the relay UE forwards a data packet and an RRC message between the remote UE 2 and the CU based on the learned mapping relationship.

Step 1007: The CU sends the UE context setup request message to the DU.

In this example, after receiving a request message (for example, an RRC connection request message, an RRC re-establishment request message, or an RRC resume request message) of the remote UE, the CU may generate the UE context setup request message, to request the DU to set up a context for the remote UE.

The UE context setup request message may include the identifier of the remote UE, an identifier that is allocated to the remote UE by the CU and that is on a CU-DU interface, the identifier of the relay UE, an SRB list and a DRB list that are requested by the CU to be added for the remote UE, and a mapping relationship between a bearer identifier of the remote UE and a logical channel.

For example, the identifier of the remote UE may be an identifier of the remote UE carried in the request message of the remote UE that is received by the CU. For example, the identifier of the remote UE may be an L2ID of the remote UE, or may be an identifier of a PC5 interface that is of the remote UE and that is between the remote UE and the relay UE, or a combination of the L2ID of the remote UE and the identifier of the PC5 interface. The CU determines, based on the received identifier of the remote UE, that the request is a request of the remote UE, and the relay UE that forwards the request message serves as a relay to provide a relay service for the remote UE. Therefore, the CU needs to determine a bearer corresponding to each logical channel for the remote UE (a logical channel between remote UE and relay UE), so that the DU sets up a context for the remote UE.

The SRB list may include an identifier of each SRB that the CU requests to be added for the remote UE. The DRB list may include an identifier of each DRB that the CU requests to be added for the remote UE, and a TEID on a CU side of a GTP-U tunnel corresponding to each DRB. The bearer identifier of the remote UE is an identifier of a bearer between the remote UE and the CU, that is, an identifier of an SRB in the SRB list and an identifier of a DRB in the DRB list. The logical channel is a logical channel of a sidelink between the remote UE and the relay UE, or a logical channel of a PC5 interface between the remote UE and the relay UE, where the remote UE and the relay UE exchange information through the logical channel in a direct transmission manner.

For example, the remote UE 2 is used as an example. The UE context setup request message includes an identifier of the remote UE 2, an identifier that is allocated to the remote UE 2 by the CU and that is on a CU-DU interface, an SRB list (including identifiers of an SRB 1 and an SRB 2 of the remote UE 2) that is requested by the CU to be added for the remote UE 2, a mapping relationship between the identifier of the SRB 1 of the remote UE 2 and a logical channel LCID 3, a mapping relationship between the identifier of the SRB 2 of the remote UE 2 and a logical channel LCID 4, a DRB list (including identifiers of a DRB 1 and a DRB 2 of the remote UE 2, a TEID on the CU side of the GTP-U tunnel corresponding to the DRB 1 of the remote UE 2, and a TEID on the CU side of the GTP-U tunnel corresponding to the DRB 2 of the remote UE 2) that is requested by the CU to be added for the remote UE 2, a mapping relationship between the identifier of the DRB 1 of the remote UE 2 and a logical channel LCID 5, and a mapping relationship between the identifier of the DRB 2 of the remote UE 2 and a logical channel LCID 6.

Optionally, the UE context setup request message further carries a second indication, and the second indication is used to indicate the DU to add, when sending downlink data information or downlink RRC information of the remote UE to the relay UE, adaptation information to the downlink data information or the downlink RRC information, to indicate that the downlink data information or the downlink RRC information belongs to the remote UE.

The UE context setup request message may be encapsulated in a CU-DU interface message and sent to the DU. For example, in a 5G system, the UE context setup request message may be encapsulated in an F1 message, and sent by the CU to the DU through an F1 interface between the CU and the DU, to request the DU to set up a context of the remote UE.

Step 1008: The DU generates RRC configuration information of the remote UE based on the identifier of the relay UE, the identifier of the remote UE, and the mapping relationship between the bearer identifier of the remote UE and the logical channel.

After receiving the UE context setup request message, the DU determines an identifier that is allocated to the remote UE by the CU and that is on the CU-DU interface, the identifier of the relay UE, the SRB list and the DRB list that are requested to be added, and the mapping relationship between the bearer identifier of the remote UE and the logical channel. In addition, the DU allocates a DU side TEID of a corresponding GTP-U tunnel to each DRB in the DRB list and a DU side identifier that is of the UE on the CU-DU interface and that is allocated to the UE, to complete context setup of the remote UE.

In addition, after receiving the UE context setup request message, the DU may further provide a bottom-layer configuration for the remote UE, for example, the DU allocates an identifier such as a C-RNTI, a local ID, or an SL-RNTI to the remote UE, and configures bottom-layer information such as a resource pool of the PC5 interface between the remote UE and the relay UE.

The DU generates the RRC configuration information of the remote UE, for example, cell group configuration information for the remote UE, based on the information carried in the UE context setup request message, the DU side identifier that is on the CU-DU interface and that is allocated to the remote UE based on the information carried in the UE context setup request message, the DU side TEID of the corresponding GTP-U tunnel, and the bottom-layer information.

Step 1009: The DU sends a UE context setup response (UE context setup response) message to the CU.

The DU encapsulates the RRC configuration information of the remote UE in the UE context setup response message, and feeds back the UE context setup response message to the CU. In this way, the context of the remote UE is set up.

Step 1010: The CU generates an RRC reconfiguration message of the remote UE based on the RRC configuration information of the remote UE.

Step 1011: The CU sends the RRC reconfiguration message of the remote UE to the remote UE.

The remote UE 2 is used as an example. When the CU sends the RRC reconfiguration message of the remote UE 2 to the remote UE 2, the CU encapsulates a PDCP layer for the RRC reconfiguration message of the remote UE 2, to obtain downlink RRC information of the remote UE 2. Then the CU includes the downlink RRC information in an RRC container of a downlink RRC information transfer message and sends the RRC container to the DU. In this example, the CU and the DU set up a context for the remote UE 2, and the remote UE 2 have an identifier on the CU-DU interface. Therefore, when the RRC reconfiguration message of the remote UE 2 is sent, the identifier on the CU-DU interface carried in the downlink RRC information transfer message is an identifier of the remote UE 2 on the CU-DU interface.

After receiving the downlink RRC information transfer message, the DU obtains the downlink RRC information of the remote UE 2, and then sequentially encapsulates the adaptation information, the RLC layer, the MAC layer, and the PHY layer outside the PDCP layer in the downlink RRC information. Finally, the DU sends the encapsulated downlink RRC information of the remote UE 2 to the relay UE through a logical channel (a logical channel between the relay UE and the DU) corresponding to an SRB 1 of the relay UE.

For example, the adaptation information is used to indicate that an RRC reconfiguration message encapsulated in the downlink RRC information is the RRC reconfiguration message of the remote UE 2. The adaptation information may include the identifier of the remote UE 2 and the identifier (it is assumed that the identifier is an LCID 3) of the logical channel between the remote UE 2 and the relay UE. Alternatively, if the configuration information generated by the DU for the relay UE includes the mapping relationship among the bearer identifier of the relay UE, the bearer identifier of the remote UE 2, and the identifier of the logical channel between the relay UE and the remote UE 2, the adaptation information may further include an identifier of the remote UE 2 and a bearer identifier of the remote UE 2 (it is assumed that the identifier is an identifier of the SRB 1 of the remote UE 2).

If the adaptation layer is deployed in the protocol stack between the relay UE and the DU based on the foregoing solution 3, to enable the relay UE to learn that the adaptation information is encapsulated in the downlink RRC information sent by the DU, the DU may add a third indication to the RLC layer, the MAC layer, or the PHY layer, to indicate that the downlink RRC information includes the adaptation information, so that the relay UE reads the adaptation information in the downlink RRC information, and further forwards the RRC reconfiguration message of the remote UE 2 based on the read adaptation information.

After receiving the downlink RRC information sent by the DU, the relay UE obtains the third indication in a process of deleting the PHY layer, the MAC layer, and the RLC layer on the Uu interface that are encapsulated in the downlink RRC information by the DU. Therefore, the relay UE determines, according to the third indication, that the downlink RRC information includes the adaptation information. In this case, after deleting the PHY layer, the MAC layer, and the RLC layer on the Uu interface in the downlink RRC information, the relay UE reads the adaptation information, and determines that an RRC reconfiguration message encapsulated in the downlink RRC information is the RRC reconfiguration message of the remote UE 2.

For example, if the adaptation information carries the identifier of the remote UE 2 and the LCID 3, after deleting the adaptation information, and encapsulating the PHY layer, the MAC layer, and the RLC layer of the PC5 interface outside the PDCP layer in the downlink RRC information, the relay UE sends the downlink RRC information to the remote UE 2 through the logical channel LCID 3. If the adaptation information carries the identifier of the remote UE 2 and the identifier of the SRB 1 of the remote UE 2, the relay UE determines, based on the mapping relationship that is indicated by the previously received RRC reconfiguration message of the relay UE and that is shown in Table 1, to send the downlink RRC information of the remote UE 2 to the remote UE 2 through the logical channel LCID 3.

It may be understood that, if the adaptation layer is deployed in the protocol stack between the relay UE and the DU based on the foregoing solution 4, the DU does not need to add the third indication to the RLC layer, the MAC layer, or the PHY layer when sending the downlink RRC information of the remote UE 2 to the relay UE. When receiving any piece of downlink RRC information, the relay UE reads adaptation information in the downlink RRC information, determines UE to which a received downlink RRC message encapsulated in the downlink RRC information belongs, and forwards the downlink RRC information based on the adaptation information.

In this way, it may be considered that a process in which the remote UE 2 requests, through the relay UE, the base station in the CU-DU architecture to set up the RRC connection, resume the RRC connection, or re-establish the RRC connection is completed. Afterwards, the remote UE 2 may perform subsequent information exchange with the CU through the relay UE.

The remote UE 2 is still used as an example. In a subsequent information exchange process, when the remote UE 2 sends an uplink RRC message to the CU, the remote UE 2 encapsulates the PDCP layer and the RLC layer, the MAC layer, and the PHY layer on the PC5 interface for the uplink RRC message, and sends obtained uplink RRC information to the relay UE. It is assumed that the uplink RRC message is an RRC message transmitted on an SRB 1 of the remote UE 2. The remote UE 2 may determine, based on the mapping relationship that is between the bearer identifier of the remote UE 2 and the identifier of the logical channel between the remote UE 2 and the relay UE and that is indicated by using the previously received RRC reconfiguration message, that the RRC message transmitted on the SRB 1 of the remote UE 2 may be sent through the logical channel LCID 3. In this case, the remote UE 2 may send the uplink RRC information to the relay UE through the logical channel LCID 3.

After deleting the RLC layer, the MAC layer, and the PHY layer on the PC5 interface in the uplink RRC information, the relay UE sequentially encapsulates the adaptation information and the RLC layer, the MAC layer, and the PHY layer on the Uu interface outside the PDCP layer in the uplink RRC information. The adaptation information may carry the identifier of the remote UE 2 and the LCID 3. Then the relay UE determines, based on the mapping relationship shown in Table 1, that the bearer identifier of the relay UE corresponding to the logical channel LCID 3 is the SRB 1 of the relay UE. The relay UE sends the uplink RRC information to the DU through a logical channel that is between the relay UE and the DU and that corresponds to the SRB 1 of the relay UE.

Alternatively, the relay UE determines, based on the mapping relationship shown in Table 1, the bearer identifier of the relay UE (namely, the SRB 1 of the relay UE) and the bearer identifier of the remote UE 2 (namely, the SRB 1 of the remote UE 2) that correspond to the logical channel LCID 3. The relay UE carries the identifier of the remote UE 2 and an identifier of the SRB 1 of the remote UE 2 in the adaptation information. Then the relay UE sends the uplink RRC information to the DU through the logical channel that is between the relay UE and the DU and that corresponds to the SRB 1 of the relay UE.

If the adaptation layer is deployed in the protocol stack between the relay UE and the DU based on the foregoing solution 3, to enable the DU to learn that the adaptation information is encapsulated outside the uplink RRC message, the relay UE may add a third indication to an RLC layer, a MAC layer, or a PHY layer on the Uu interface of the uplink RRC message, to indicate that the adaptation information is encapsulated outside the uplink RRC message, so that the DU reads the adaptation information when receiving the uplink RRC information, to determine that the uplink RRC message encapsulated in the uplink RRC information belongs to the remote UE 2.

After receiving the uplink RRC information, the DU determines, according to the third indication carried in the PHY layer, the MAC layer, or the RLC layer of the uplink RRC information, that the uplink RRC information includes the adaptation information. After deleting the PHY layer, the MAC layer, and the RLC layer of the uplink RRC information, the DU reads the adaptation information of the uplink RRC information.

For example, if the adaptation information carries the identifier of the remote UE 2 and the LCID 3, the DU may determine, based on the mapping relationship shown in Table 1, the identifier of an SRB 2 of the relay UE and/or an identifier of an SRB of the remote UE 2 corresponding to the LCID 3, namely, the identifier of the SRB 1 of the remote UE 2. If the adaptation information carries the identifier of the remote UE 2 and the identifier of the SRB 1 of the remote UE, the DU may directly obtain the identifier of the SRB 1 of the remote UE from the adaptation information.

Then, the DU encapsulates the uplink RRC message, a PDCP layer encapsulated outside the uplink RRC message, the identifier of the remote UE 2 on the CU-DU interface, and the identifier of the SRB 1 of the remote UE 2 in an uplink RRC information transfer message, and sends the uplink RRC information transfer message to the CU.

After receiving the uplink RRC information transfer message, the CU obtains the carried uplink RRC information of the remote UE 2, and sends the uplink RRC information to the PDCP entity corresponding to the SRB 1 of the remote UE 2 based on the identifier of the SRB 1 of the remote UE 2 that is carried in the uplink RRC information transfer message.

It may be understood that, if the adaptation layer is deployed in the protocol stack between the relay UE and the DU based on the foregoing solution 4, the relay UE does not need to add the third indication to the PHY layer, the MAC layer, or the RLC layer on the Uu interface when sending an uplink RRC message of the remote UE. When receiving any piece of uplink RRC information sent by the relay UE, the DU reads adaptation information in the uplink RRC information, and determines UE to which the received uplink RRC message encapsulated in the uplink RRC information belongs. In this case, when the relay UE sends the uplink RRC message of the relay UE, the adaptation information that is encapsulated outside may include the identifier of the relay UE.

When the CU sends a downlink RRC message to the remote UE 2, for a specific process, refer to the process in the foregoing step 1011 in which the CU sends the RRC reconfiguration message of the remote UE 2 to the remote UE 2. Details are not described herein again.

For a user plane data transmission process between the remote UE 2 and the CU, when the remote UE 2 sends an uplink data packet to the CU, the remote UE 2 encapsulates the PDCP layer and the RLC layer, the MAC layer, and the PHY layer on the PC5 interface for the uplink data packet, and sends obtained uplink data information to the relay UE. It is assumed that the uplink data packet is a data packet transmitted on a DRB 1 of the remote UE 2. The remote UE 2 determines, based on a mapping relationship that is between the bearer identifier of the remote UE 2 and the identifier of the logical channel and that is indicated by using the previously received RRC reconfiguration message, that the uplink data information is transmitted to the relay UE through the logical channel LCID 5. After deleting the RLC layer, the MAC layer, and the PHY layer on the PC5 interface in the uplink data information, the relay UE sequentially encapsulates the adaptation information and the RLC layer, the MAC layer, and the PHY layer on the Uu interface outside the PDCP layer in the uplink data information. The adaptation information is used to indicate that the uplink data packet in the uplink data information belongs to the remote UE 2, and the adaptation information may carry the identifier of the remote UE 2 and the LCID 5. Then the relay UE determines, based on the mapping relationship shown in Table 1, that the bearer identifier of the relay UE corresponding to the logical channel LCID 5 is a DRB 3 of the relay UE. The relay UE sends the uplink data information to the DU through a logical channel that is between the relay UE and the DU and that corresponds to the DRB 3 of the relay UE.

Alternatively, the relay UE determines, based on the mapping relationship shown in Table 1, the bearer identifier of the relay UE (namely, the DRB 3 of the relay UE) and the bearer identifier of the remote UE 2 (namely, a DRB 1 of the remote UE 2) that correspond to the logical channel LCID 5. The relay UE includes the identifier of the remote UE 2 and an identifier of the DRB 1 of the remote UE 2 in the adaptation information. Then the relay UE sends the uplink data information to the DU through a logical channel that is between the relay UE and the DU and that corresponds to the DRB 3 of the relay UE.

If the adaptation layer is deployed in the protocol stack between the relay UE and the DU based on the foregoing solution 3, to enable the DU to learn that the adaptation information is encapsulated outside the uplink data packet of the remote UE 2, the relay UE may add the third indication to the RLC layer, the MAC layer, or the PHY layer of the uplink data packet on the Uu interface, to indicate that the adaptation information is encapsulated outside the uplink data packet, so that the DU reads the adaptation information when receiving the uplink data information, to determine that the uplink data packet in the uplink data information belongs to the remote UE 2.

After receiving the uplink data information, the DU determines, according to the third indication carried in a PHY layer, a MAC layer, or an RLC layer of the uplink data information, that the uplink data information includes the adaptation information. The DU reads the adaptation information of the uplink data information, to determine that the uplink data packet encapsulated in the uplink data information belongs to the remote UE 2. If the adaptation information carries the identifier of the remote UE 2 and the LCID 5, the DU may determine, based on the mapping relationship shown in Table 1, an identifier of the DRB 3 of the relay UE and an identifier of a DRB of the remote UE 2 corresponding to the LCID 5, namely, the identifier of the DRB 1 of the remote UE 2. Further, the DU includes, in an uplink GTP-U frame corresponding to the DRB 1 of the remote UE 2, the uplink data information (that is, including the uplink data packet and a PDCP layer encapsulated outside the uplink data packet) whose PHY layer, MAC layer, and RLC layer are deleted, and sends the uplink GTP-U frame to the CU. That is, the uplink GTP-U frame carries tunnel endpoint information of a GTP-U tunnel corresponding to the DRB 1 of the remote UE 2. If the adaptation information carries the identifier of the remote UE 2 and the identifier of the DRB 1 of the remote UE 2, the DU may directly include, in the uplink GTP-U frame corresponding to the DRB 1 of the remote UE 2, the uplink data information whose PHY layer, MAC layer, RLC layer, and adaptation information are deleted, and send the uplink GTP-U frame to the CU.

It may be understood that, if the adaptation layer is deployed in the protocol stack between the relay UE and the DU based on the foregoing solution 4, the relay UE does not need to add the third indication to the PHY layer, the MAC layer, or the RLC layer when sending the uplink data packet of the remote UE. When receiving any piece of uplink data information, the DU reads adaptation information in the uplink data information, and determines UE to which the received uplink data packet encapsulated in the uplink data information belongs. In this case, when the relay UE sends the uplink data packet of the relay UE, the adaptation information that is encapsulated outside may include the identifier of the relay UE.

After receiving the uplink GTP-U frame, the CU obtains the uplink data information. Then the CU sends the uplink data information to a PDCP entity corresponding to the DRB 1 of the remote UE 2.

When the CU sends a downlink data packet to the remote UE 2, the CU encapsulates a PDCP layer for the downlink data packet, to obtain downlink data information. It is assumed that the downlink data packet is a data packet transmitted by using the DRB 1 of the remote UE 2. The CU includes the downlink data information in a downlink GTP-U frame corresponding to the DRB 1 of the remote UE 2, and sends the downlink GTP-U frame to the DU. That is, the downlink GTP-U frame carries tunnel endpoint information of the GTP-U tunnel corresponding to the DRB 1 of the remote UE 2.

After receiving the downlink GTP-U frame, the DU obtains the carried downlink data information. Then the DU sequentially encapsulates the adaptation information and the RLC layer, the MAC layer, and the PHY layer on the Uu interface outside the PDCP layer in the downlink data information. Finally, the DU sends the encapsulated downlink RRC information of the remote UE 2 to the relay UE through a logical channel (a logical channel between the relay UE and the DU) corresponding to the DRB 3 of the relay UE. For example, the adaptation information is used to indicate that the downlink data packet encapsulated in the downlink data information is a downlink data packet of the remote UE 2, and the adaptation information may include the identifier of the remote UE 2 and the identifier of the logical channel. For example, the identifier of the logical channel is the LCID 5 corresponding to the DRB 1 of the remote UE 2. Alternatively, if the configuration information generated by the DU for the relay UE includes the mapping relationship among the bearer identifier of the relay UE, the bearer identifier of the remote UE 2, and the identifier of the logical channel between the relay UE and the remote UE 2, the adaptation information may further include an identifier of the remote UE 2 and the identifier of the DRB 1 of the remote UE 2.

If the adaptation layer is deployed in the protocol stack between the relay UE and the DU based on the foregoing solution 3, to enable the relay UE to learn that the adaptation information is encapsulated outside the downlink data packet of the remote UE 2, the DU may add the third indication to the RLC layer, the MAC layer, or the PHY layer on the Uu interface, to indicate to the relay UE that the adaptation information is encapsulated outside the downlink data packet, so that the relay UE reads the adaptation information.

After receiving the downlink data information sent by the DU, the relay UE deletes the PHY layer, the MAC layer, and the RLC layer that are encapsulated by the DU on the Uu interface and that are in the downlink data information, and determines, according to the third indication, that the adaptation information exists in the downlink data information. The relay UE reads the adaptation information, to determine that the downlink data packet encapsulated in the downlink data information is the downlink data packet of the remote UE 2.

For example, if the adaptation information carries the identifier of the remote UE 2 and the LCID 5, after the relay UE deletes the adaptation information, and sequentially encapsulates the PHY layer, the MAC layer, and the RLC layer of the PC5 interface outside the PDCP layer in the downlink data information, the relay UE sends the downlink data information to the remote UE 2 through the logical channel LCID 5 between the relay UE and the remote UE 2. If the adaptation information carries the identifier of the remote UE 2 and the identifier of the DRB 1 of the remote UE 2, the relay UE determines, based on the mapping relationship that is indicated by using the previously received RRC reconfiguration message of the relay UE and that is shown in Table 1, to send the downlink data information to the remote UE 2 through the logical channel LCID 5 between the remote UE 2 and the relay UE.

It may be understood that, if the adaptation layer is deployed in the protocol stack between the relay UE and the DU based on the foregoing solution 4, the DU does not need to add the third indication to the PHY layer, the MAC layer, or the RLC layer in the downlink data packet of the remote UE 2. When receiving any piece of downlink data information, the relay UE reads the adaptation information in the downlink data information, determines UE to which the received downlink data packet encapsulated in the downlink data information belongs, and forwards the downlink data information based on the adaptation information. In this case, if the DU sends the downlink data packet of the relay UE to the relay UE, the encapsulated adaptation information may carry the identifier of the relay UE, to indicate that the downlink data information belongs to the relay UE.

The communication method provided in this application is described above, to implement the UE-to-network relay communication process based on the CU-DU architecture when the adaptation information is deployed on the DU side.

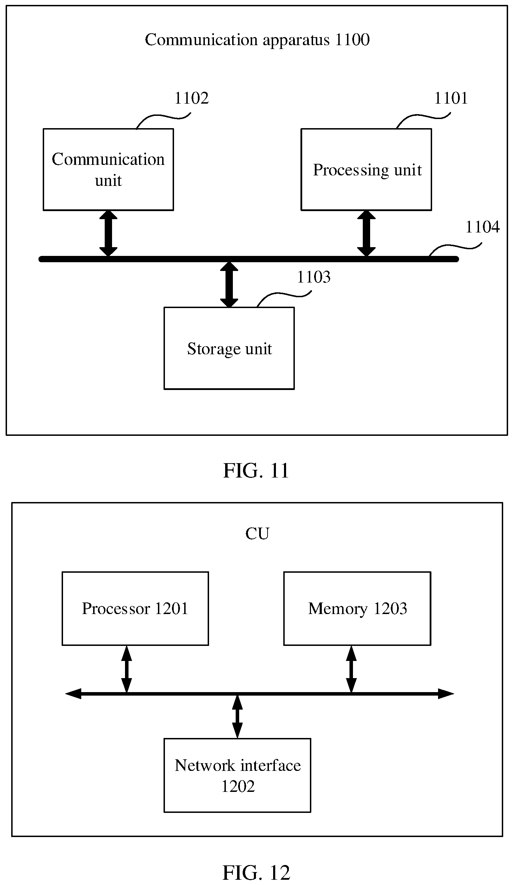

The following describes a communication apparatus 1100 provided in an embodiment of this application. As shown in FIG. 11, the communication apparatus 1100 includes a processing unit 1101 and a communication unit 1102. Optionally, the communication apparatus 1100 further includes a storage unit 1103. The processing unit 1101, the communication unit 1102, and the storage unit 1103 are connected through a communication bus 1104.

The processing unit 1101 may include at least one processor, where the processor may include at least one of the following types: a general-purpose central processing unit (Central Processing Unit, CPU), a digital signal processor (Digital Signal Processor, DSP), a microprocessor, an application-specific integrated circuit application-specific integrated circuit (Application-Specific Integrated Circuit, ASIC), a microcontroller unit (Microcontroller Unit, MCU), a field programmable gate array (Field Programmable Gate Array, FPGA), or an integrated circuit configured to implement a logical operation. For example, the processor may be a single-core (single-CPU) processor or a multi-core (multi-CPU) processor. The processor may implement or execute various example logical blocks, modules, and circuits described with reference to content disclosed in the embodiments of this application. Alternatively, the processor may be a combination of processors implementing a computing function, for example, a combination of one or more microprocessors, or a combination of a DSP and a microprocessor.

The communication unit 1102 may be a functional module with a transceiver function, and is configured to exchange information with a CU, a DU, or UE.

The storage unit 1103 may include one or more memories. The memory may be a component configured to store a program or data in one or more devices or circuits. The storage unit 1103 may exist independently, and is connected to the processing unit 1101 through the communication bus 1104. The storage unit 1103 may alternatively be integrated together with the processing unit 1104.

The memory may include at least one of the following types: a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically erasable programmable read-only memory, EEPROM). In some scenarios, the memory may alternatively be a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by a computer. However, the memory is not limited thereto.

The communication bus 1104 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 11, but this does not mean that there is only one bus or only one type of bus.

The communication apparatus 1100 may be used in a CU, a DU, a circuit, a hardware component, or a chip.

Optionally, the communication apparatus 1100 may be a CU in the embodiments of this application. The communication unit 1102 may be a network interface (for example, including an F1 interface between the CU and the DU), the processing unit 1101 may be, for example, a processor, and the storage unit 1103 may be, for example, a memory. When the CU includes the storage unit 1103, the storage unit 1103 is configured to store computer-executable instructions, the processing unit 1101 is connected to the storage unit 1103, and the processing unit 1101 executes the computer-executable instructions stored in the storage unit 1103, to enable the CU to perform the method performed by the CU in the foregoing embodiments, including related steps performed by the CU in the embodiments shown in FIG. 6, FIG. 10A, and FIG. 10B and other processes performed by the CU in the technology described in this specification. All related content of the steps in the foregoing method embodiments may be cited in function descriptions of the corresponding functional modules. Details are not described herein again.

When the processing unit 1101 is a processor 1201, the communication unit 1102 is a network interface 1202, and the storage unit 1103 is a memory 1203, the CU in this application may be the CU shown in FIG. 12.

Optionally, the communication apparatus 1100 may be a chip in a CU in the embodiments of this application. The communication unit 1102 may be an input/output interface, a pin, a circuit, or the like. Optionally, the storage unit 1103 may store computer-executable instructions in the method of the CU side, to enable the processing unit 1101 to perform the method performed by the CU in the foregoing embodiments, including related steps performed by the CU in the embodiments shown in FIG. 6, FIG. 10A, and FIG. 10B and other processes performed by the CU in the technology described in this specification. The storage unit 1103 may be a register, a cache, a RAM, or the like, and the storage unit 1103 may be integrated together with the processing unit 1101. The storage unit 1103 may be a ROM or another type of static storage device that can store static information and instructions, and the storage unit 1103 may be independent of the processing unit 1101.

Optionally, the communication apparatus 1100 may be a DU in the embodiments of this application. The communication unit 1102 may include a network interface (for example, including an F1 interface between the CU and the DU), an antenna, and a transceiver. The processing unit 1101 may be, for example, a processor, and the storage unit 1103 may be, for example, a memory. When the DU includes the storage unit 1103, the storage unit 1103 is configured to store computer-executable instructions, the processing unit 1101 is connected to the storage unit 1103, and the processing unit 1101 executes the computer-executable instructions stored in the storage unit 1103, to enable the DU to perform the method performed by the DU in the foregoing embodiments, including related steps performed by the DU in the embodiments shown in FIG. 6, FIG. 10A, and FIG. 10B and other processes performed by the DU in the technology described in this specification. All related content of the steps in the foregoing method embodiments may be cited in function descriptions of the corresponding functional modules. Details are not described herein again.

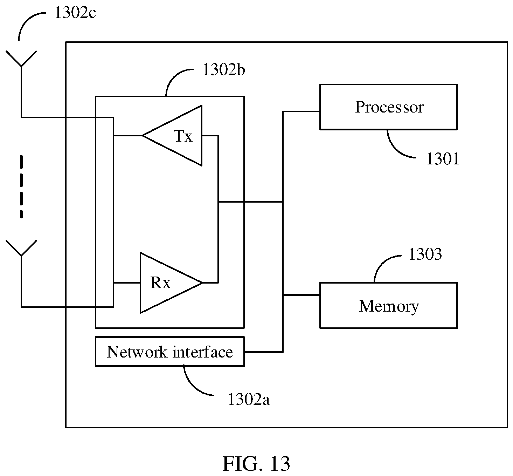

When the processing unit 1101 is a processor 1301, the communication unit 1102 includes a network interface 1302a, a transceiver 1302b, and an antenna 1302c, and the storage unit 1103 is a memory 1303, the DU in this application may be the DU shown in FIG. 13. Optionally, with development of wireless communication technology, the transceiver and the network interface may be integrated to the communication apparatus. For example, the communication unit 1102 is integrated with the network interface 1302a and the transceiver 1302b.

Optionally, the communication apparatus 1100 may be a chip in a DU in the embodiments of this application. The communication unit 1102 may be an input/output interface, a pin, a circuit, or the like. Optionally, the storage unit 1103 may store computer-executable instructions in the method of the DU side, to enable the processing unit 1101 to perform the method performed by the DU in the foregoing embodiments, including related steps performed by the DU in the embodiments shown in FIG. 6, FIG. 10A, and FIG. 10B and other processes performed by the DU in the technology described in this specification. The storage unit 1103 may be a register, a cache, a RAM, or the like, and the storage unit 1103 may be integrated together with the processing unit 1101. The storage unit 1103 may be a ROM or another type of static storage device that can store static information and instructions, and the storage unit 1103 may be independent of the processing unit 1101.

An embodiment of this application further provides a computer-readable storage medium. The methods described in the foregoing embodiments may be all or partially implemented by using software, hardware, firmware, or any combination thereof. If the methods are implemented in the software, functions used as one or more instructions or code may be stored in the computer-readable medium or transmitted on the computer-readable medium. The computer-readable medium may include a computer storage medium and a communication medium, and may further include any medium that can transfer a computer program from one place to another. The storage medium may be any available medium accessible to a computer.

In an optional design, the computer-readable medium may include a RAM, a ROM, an EEPROM, a CD-ROM or another optical disc storage, a magnetic disk storage or another magnetic storage device, or any other medium that can be configured to carry or store required program code in a form of an instruction or a data structure and that may be accessed by the computer. In addition, any connection is appropriately referred to as a computer-readable medium. For example, if a coaxial cable, an optical fiber cable, a twisted pair, a digital subscriber line (DSL), or wireless technologies (such as infrared, radio, and microwave) are used to transmit software from a website, a server, or another remote source, the coaxial cable, the optical fiber cable, the twisted pair, the DSL, or the wireless technologies such as infrared, radio, and microwave are included in a definition of the medium. Magnetic disks and optical discs used in this specification include a compact disk (CD), a laser disk, an optical disc, a digital versatile disc (DVD), a floppy disk, and a Blu-ray disc. The magnetic disks usually magnetically reproduce data, and the optical discs optically reproduce data by using laser light. The foregoing combinations should also be included within the scope of the computer-readable medium.

An embodiment of this application further provides a computer program product. The methods described in the foregoing embodiments may be all or partially implemented by using software, hardware, firmware, or any combination thereof. When the methods are implemented in the software, the methods may be all or partially implemented in a form of the computer program product. The computer program product includes one or more computer instructions. When the foregoing computer program instruction is loaded and executed on a computer, the procedures or functions described in the foregoing method embodiments are all or partially generated. The foregoing computer may be a general-purpose computer, a dedicated computer, a computer network, a network device, user equipment, or another programmable apparatus.

## Claims

1. A communication method, comprising:
generating, by a centralized unit, CU, a UE context modification request message, wherein the UE context modification request message is used to request a distributed unit, DU, to modify a context of relay user equipment, UE, the UE context modification request message carries an identifier of remote UE, a bearer identifier of the relay UE, and an identifier of a logical channel having a mapping relationship with the bearer identifier of the relay UE, the bearer identifier of the relay UE is an identifier of a bearer between the relay UE and the CU, and the logical channel is a logical channel between the remote UE and the relay UE; and
sending, by the CU, the UE context modification request message to the DU wherein the method further comprises:
sending, by the CU, a downlink radio resource control RRC information transfer message to the DU, wherein the downlink RRC information transfer message comprises downlink RRC information of the remote UE, an identifier of the relay UE on a CU-DU interface, and a first indication, the downlink RRC information comprises a downlink RRC message of the remote UE and a packet data convergence protocol PDCP layer and adaptation information that are encapsulated outside the downlink RRC message, the adaptation information is used to indicate that the downlink RRC message is the downlink RRC message of the remote UE, and the first indication is used to indicate that the adaptation information is encapsulated outside the downlink RRC message..

2. The method according to claim 1, wherein the UE context modification request message further carries a bearer identifier of the remote UE having a mapping relationship with the bearer identifier of the relay UE and the identifier of the logical channel, and the bearer identifier of the remote UE is an identifier of a bearer between the remote UE and the CU.

3. The method according to any one of claims 1 or 2, wherein the method further comprises:
receiving, by the CU, an uplink RRC information transfer message sent by the DU, wherein the uplink RRC information transfer message comprises uplink RRC information of the remote UE, an identifier of the relay UE on a CU-DU interface, and a first indication, the uplink RRC information comprises an uplink RRC message of the remote UE and a PDCP layer and adaptation information that are encapsulated outside the uplink RRC message, the adaptation information is used to indicate that the uplink RRC message is the uplink RRC message of the remote UE, and the first indication is used to indicate that the adaptation information is encapsulated outside the uplink RRC message.

4. The method according to any one of claims 1 to 3, wherein the method further comprises:
sending, by the CU, a downlink general packet radio service tunneling protocol GTP-U frame to the DU, wherein the downlink GTP-U frame comprises downlink data information of the remote UE, a first indication, and a tunnel endpoint identifier of a GTP-U tunnel of the relay UE, the downlink data information comprises a downlink data packet of the remote UE and a PDCP layer and adaptation information that are encapsulated outside the downlink data packet, the adaptation information is used to indicate that the downlink data packet is the downlink data packet of the remote UE, and the first indication is used to indicate that the adaptation information is encapsulated outside the downlink data packet.

5. The method according to any one of claims 1 to 4, wherein the method further comprises:
receiving, by the CU, an uplink GTP-U frame sent by the DU, wherein the uplink GTP-U frame comprises uplink data information of the remote UE, a first indication, and a tunnel endpoint identifier of a GTP-U tunnel of the relay UE, the uplink data information comprises an uplink data packet of the remote UE and a PDCP layer and adaptation information that are encapsulated outside the uplink data packet, the adaptation information is used to indicate that the uplink data packet is the uplink data packet of the remote UE, and the first indication is used to indicate that the adaptation information is encapsulated outside the uplink data packet.

6. A communication method, wherein the method comprises:
receiving, by a distributed unit, DU, a UE context modification request message sent by a centralized unit, CU, wherein the UE context modification request message carries an identifier of remote user equipment, UE, a bearer identifier of relay UE, and an identifier of a logical channel having a mapping relationship with the bearer identifier of the relay UE, the bearer identifier of the relay UE is an identifier of a bearer between the relay UE and the CU, and the logical channel is a logical channel between the remote UE and the relay UE; and
generating, by the DU, radio resource control RRC configuration information of the relay UE based on the identifier of the remote UE, the bearer identifier of the relay UE, and the identifier of the logical channel, wherein the RRC configuration information comprises a mapping relationship among the identifier of the remote UE, the bearer identifier of the relay UE, and the identifier of the logical channel wherein the method further comprises:
receiving, by the DU, a downlink radio resource control RRC information transfer message sent by the CU, wherein the downlink RRC information transfer message comprises downlink RRC information of the remote UE, an identifier of the relay UE on a CU-DU interface, and a first indication, the downlink RRC information comprises a downlink RRC message of the remote UE and a packet data convergence protocol PDCP layer and adaptation information that are encapsulated outside the downlink RRC message, the adaptation information is used to indicate that the downlink RRC message is the downlink RRC message of the remote UE, and the first indication is used to indicate that the adaptation information is encapsulated outside the downlink RRC message; and
sending, by the DU, the downlink RRC information encapsulated with a radio link control RLC layer, a media access control MAC layer, and a physical PHY layer to the relay UE, wherein the PHY layer, the MAC layer, or the RLC layer carries a third indication, and the third indication is used to indicate that the adaptation information is encapsulated outside the downlink RRC message..

7. The method according to claim 6, wherein the UE context modification request message further carries a bearer identifier of the remote UE having a mapping relationship with the bearer identifier of the relay UE and the identifier of the logical channel, and the bearer identifier of the remote UE is an identifier of a bearer between the remote UE and the CU; and
a mapping relationship between the bearer identifier of the relay UE and the identifier of the logical channel is specifically the mapping relationship among the bearer identifier of the relay UE, the identifier of the logical channel, and the bearer identifier of the remote UE.

8. The method according to any one of claims 6 or 7, wherein the method further comprises:
receiving, by the DU, uplink RRC information of the remote UE sent by the relay UE, wherein the uplink RRC information comprises an uplink RRC message of the remote UE, a PDCP layer, adaptation information, and an RLC layer, a MAC layer, and a PHY layer that are encapsulated outside the uplink RRC message, the PHY layer, the MAC layer, or the RLC layer carries a third indication, the third indication is used to indicate that the adaptation information is encapsulated outside the uplink RRC message, and the adaptation information is used to indicate that the uplink RRC message is the uplink RRC message of the remote UE; and
sending, by the DU, an uplink RRC information transfer message to the CU, wherein the uplink RRC information transfer message comprises an identifier of the relay UE on a CU-DU interface, a first indication, the uplink RRC message, and the PDCP layer and the adaptation information that are encapsulated outside the uplink RRC message.

9. The method according to any one of claims 6 to 8, wherein the method further comprises:
receiving, by the DU, a downlink general packet radio service tunneling protocol GTP-U frame sent by the CU, wherein the downlink GTP-U frame comprises downlink data information of the remote UE, a first indication, and a tunnel endpoint identifier of a GTP-U tunnel of the relay UE, the downlink data information comprises a downlink data packet of the remote UE and a PDCP layer and adaptation information that are encapsulated outside the downlink data packet, the adaptation information is used to indicate that the downlink data packet is the downlink data packet of the remote UE, and the first indication is used to indicate that the adaptation information is encapsulated outside the downlink data packet; and
sending, by the DU, the downlink data information encapsulated with an RLC layer, a MAC layer, and a PHY layer to the relay UE, wherein the PHY layer, the MAC layer, or the RLC layer carries a third indication, and the third indication is used to indicate that the adaptation information is encapsulated outside the downlink data packet.

10. The method according to any one of claims 6 to 9, wherein the method further comprises:
receiving, by the DU, uplink data information of the remote UE sent by the relay UE, wherein the uplink data information comprises an uplink data packet of the remote UE, a PDCP layer, adaptation information, and an RLC layer, a MAC layer, and a PHY layer that are encapsulated outside the uplink data packet, the PHY layer, the MAC layer, or the RLC layer carries a third indication, the third indication is used to indicate that the adaptation information is encapsulated outside the uplink data packet, and the adaptation information is used to indicate that the uplink data packet is the uplink data packet of the remote UE; and
sending, by the DU, an uplink GTP-U frame to the CU, wherein the uplink GTP-U frame comprises a first indication, a tunnel endpoint identifier of a GTP-U tunnel of the relay UE, the uplink data packet, and the PDCP layer and the adaptation information that are encapsulated outside the uplink data packet, wherein the first indication is used to indicate that the adaptation information is encapsulated outside the uplink data packet.

11. A communication apparatus, comprising a unit configured to perform the method according to any one of claims 1 to 10.

12. A computer-readable storage medium, storing a program, wherein the program is configured to implement the communication method according to any one of claims 1 to 10.

13. A computer program, comprising a program or instructions, wherein when the program or the instructions are run on a computer, the method according to any one of claims 1 to 10 is performed.

## Patentansprüche

1. Kommunikationsverfahren, umfassend:
Erzeugen einer UE-Kontextmodifikationsanforderungsnachricht durch eine zentrale Einheit, CU, wobei die UE-Kontextmodifikationsanforderungsnachricht verwendet wird, um eine verteilte Einheit, DU, aufzufordern, einen Kontext einer Relais-Benutzereinrichtung, UE, zu modifizieren, die UE-Kontextmodifikationsanforderungsnachricht eine Kennung einer entfernten UE, eine Trägerkennung der Relais-UE und eine Kennung eines logischen Kanals mit einer Zuordnungsbeziehung mit der Trägerkennung der Relais-UE überträgt, die Trägerkennung der Relais-UE eine Kennung eines Trägers zwischen der Relais-UE und der CU ist und der logische Kanal ein logischer Kanal zwischen der entfernten UE und der Relais-UE ist; und
Senden der UE-Kontextmodifikationsanforderungsnachricht durch die CU an die DU, wobei das Verfahren ferner umfasst:
Senden einer Downlink-Funkressourcensteuerungs-(RRC)-Informationsübertragungsnachricht durch die CU an die DU, wobei die Downlink-RRC-Informationsübertragungsnachricht Downlink-RRC-Informationen der entfernten UE, eine Kennung der Relais-UE an einer CU-DU-Schnittstelle und eine erste Anzeige umfasst, wobei die Downlink-RRC-Informationen eine Downlink-RRC-Nachricht der entfernten UE und eine Paketdatenkonvergenzprotokoll-(PDCP)-Schicht sowie Anpassungsinformationen umfassen, die außerhalb der Downlink-RRC-Nachricht verkapselt sind, wobei die Anpassungsinformationen verwendet werden, um anzuzeigen, dass die Downlink-RRC-Nachricht die Downlink-RRC-Nachricht der entfernten UE ist, und die erste Anzeige verwendet wird, um anzuzeigen, dass die Anpassungsinformationen außerhalb der Downlink-RRC-Nachricht verkapselt sind.

2. Verfahren nach Anspruch 1, wobei die UE-Kontextmodifikationsanforderungsnachricht ferner eine Trägerkennung der entfernten UE mit einer Zuordnungsbeziehung mit der Trägerkennung der Relais-UE und der Kennung des logischen Kanals überträgt, und die Trägerkennung der entfernten UE eine Kennung eines Trägers zwischen der entfernten UE und der CU ist.

3. Verfahren nach einem der Ansprüche 1 oder 2, wobei das Verfahren ferner umfasst: Empfangen einer Uplink-RRC-Informationsübertragungsnachricht, die von der DU gesendet wird, durch die CU, wobei die Uplink-RRC-Informationsübertragungsnachricht Uplink-RRC-Informationen der entfernten UE, eine Kennung der Relais-UE an einer CU-DU-Schnittstelle und eine erste Anzeige umfasst, die Uplink-RRC-Informationen eine Uplink-RRC-Nachricht der entfernten UE und eine PDCP-Schicht sowie Anpassungsinformationen umfassen, die außerhalb der Uplink-RRC-Nachricht verkapselt sind, wobei die Anpassungsinformationen verwendet werden, um anzuzeigen, dass die Uplink-RRC-Nachricht die Uplink-RRC-Nachricht der entfernten UE ist, und die erste Anzeige verwendet wird, um anzuzeigen, dass die Anpassungsinformationen außerhalb der Uplink-RRC-Nachricht verkapselt sind.

4. Verfahren nach einem der Ansprüche 1 bis 3, wobei das Verfahren ferner umfasst: Senden eines Downlink-Rahmens des Tunnelprotokolls des allgemeinen paketvermittelten Funkdiensts, GTP-U, durch die CU an die DU, wobei der Downlink-GTP-U-Rahmen Downlink-Dateninformationen der entfernten UE, eine erste Anzeige und eine Tunnelendpunktkennung eines GTP-U-Tunnels der Relais-UE umfasst, die Downlink-Dateninformationen ein Downlink-Datenpaket der entfernten UE und eine PDCP-Schicht sowie Anpassungsinformationen umfassen, die außerhalb des Downlink-Datenpakets verkapselt sind, wobei die Anpassungsinformationen verwendet werden, um anzuzeigen, dass das Downlink-Datenpaket das Downlink-Datenpaket der entfernten UE ist, und die erste Anzeige verwendet wird, um anzuzeigen, dass die Anpassungsinformationen außerhalb des Downlink-Datenpakets verkapselt sind.

5. Verfahren nach einem der Ansprüche 1 bis 4, wobei das Verfahren ferner umfasst: Empfangen eines Uplink-GTP-U-Rahmens, der von der DU gesendet wird, durch die CU, wobei der Uplink-GTP-U-Rahmen Uplink-Dateninformationen der entfernten UE, eine erste Anzeige und eine Tunnelendpunktkennung eines GTP-U-Tunnels der Relais-UE umfasst, die Uplink-Dateninformationen ein Uplink-Datenpaket der entfernten UE und eine PDCP-Schicht sowie Anpassungsinformationen umfassen, die außerhalb des Uplink-Datenpakets verkapselt sind, wobei die Anpassungsinformationen verwendet werden, um anzuzeigen, dass das Uplink-Datenpaket das Uplink-Datenpaket der entfernten UE ist, und die erste Anzeige verwendet wird, um anzuzeigen, dass die Anpassungsinformationen außerhalb des Uplink-Datenpakets verkapselt sind.

6. Kommunikationsverfahren, wobei das Verfahren umfasst:
Empfangen einer UE-Kontextmodifikationsanforderungsnachricht, die von einer zentralen Einheit, CU, gesendet wird, durch eine verteilte Einheit, DU, wobei die UE-Kontextmodifikationsanforderungsnachricht eine Kennung einer entfernten Benutzereinrichtung, UE, eine Trägerkennung einer Relais-UE und eine Kennung eines logischen Kanals mit einer Zuordnungsbeziehung mit der Trägerkennung der Relais-UE überträgt, die Trägerkennung der Relais-UE eine Kennung eines Trägers zwischen der Relais-UE und der CU ist, und der logische Kanal ein logischer Kanal zwischen der entfernten UE und der Relais-UE ist; und
Erzeugen von Funkressourcensteuerungs-(RRC)-Konfigurationsinformationen der Relais-UE durch die DU basierend auf der Kennung der entfernten UE, der Trägerkennung der Relais-UE und der Kennung des logischen Kanals, wobei die RRC-Konfigurationsinformationen eine Zuordnungsbeziehung zwischen der Kennung der entfernten UE, der Trägerkennung der Relais-UE und der Kennung des logischen Kanals umfassen, wobei das Verfahren ferner umfasst:
Empfangen einer Downlink-Funkressourcensteuerungs-(RRC)-Informationsübertragungsnachricht, die von der CU gesendet wird, durch die DU, wobei die Downlink-RRC-Informationsübertragungsnachricht Downlink-RRC-Informationen der entfernten UE, eine Kennung der Relais-UE an einer CU-DU-Schnittstelle und eine erste Anzeige umfasst, die Downlink-RRC-Informationen eine Downlink-RRC-Nachricht der entfernten UE und eine Paketdatenkonvergenzprotokoll-(PDCP)-Schicht sowie Anpassungsinformationen umfassen, die außerhalb der Downlink-RRC-Nachricht verkapselt sind, wobei die Anpassungsinformationen verwendet werden, um anzuzeigen, dass die Downlink-RRC-Nachricht die Downlink-RRC-Nachricht der entfernten UE ist, und die erste Anzeige verwendet wird, um anzuzeigen, dass die Anpassungsinformationen außerhalb der Downlink-RRC-Nachricht verkapselt sind; und
Senden der Downlink-RRC-Informationen durch die DU verkapselt mit einer Funkverbindungssteuerungs-(RLC)-Schicht, einer Medienzugriffssteuerungs-(MAC)-Schicht und einer physikalischen, PHY, Schicht an die Relais-UE, wobei die PHY-Schicht, die MAC-Schicht oder die RLC-Schicht eine dritte Anzeige überträgt, und die dritte Anzeige verwendet wird, um anzuzeigen, dass die Anpassungsinformationen außerhalb der Downlink-RRC-Nachricht verkapselt sind.

7. Verfahren nach Anspruch 6, wobei die UE-Kontextmodifikationsanforderungsnachricht ferner eine Trägerkennung der entfernten UE mit einer Zuordnungsbeziehung mit der Trägerkennung der Relais-UE und der Kennung des logischen Kanals überträgt, und die Trägerkennung der entfernten UE eine Kennung eines Trägers zwischen der entfernten UE und der CU ist; und
eine Zuordnungsbeziehung zwischen der Trägerkennung der Relais-UE und der Kennung des logischen Kanals insbesondere die Zuordnungsbeziehung zwischen der Trägerkennung der Relais-UE, der Kennung des logischen Kanals und der Trägerkennung der entfernten UE ist.

8. Verfahren nach einem der Ansprüche 6 oder 7, wobei das Verfahren ferner umfasst:
Empfangen von Uplink-RRC-Informationen der entfernten UE, die von der Relais-UE gesendet werden, durch die DU, wobei die Uplink-RRC-Informationen eine Uplink-RRC-Nachricht der entfernten UE, eine PDCP-Schicht, Anpassungsinformationen und eine RLC-Schicht, eine MAC-Schicht und eine PHY-Schicht umfassen, die außerhalb der Uplink-RRC-Nachricht verkapselt sind, wobei die PHY-Schicht, die MAC-Schicht oder die RLC-Schicht eine dritte Anzeige überträgt, die dritte Anzeige verwendet wird, um anzuzeigen, dass die Anpassungsinformationen außerhalb der Uplink-RRC-Nachricht verkapselt sind, und die Anpassungsinformationen verwendet werden, um anzuzeigen, dass die Uplink-RRC-Nachricht die Uplink-RRC-Nachricht der entfernten UE ist; und
Senden einer Uplink-RRC-Informationsübertragungsnachricht durch die DU an die CU, wobei die Uplink-RRC-Informationsübertragungsnachricht eine Kennung der Relais-UE an einer CU-DU-Schnittstelle, eine erste Anzeige, die Uplink-RRC-Nachricht und die PDCP-Schicht sowie die Anpassungsinformationen umfasst, die außerhalb der Uplink-RRC-Nachricht verkapselt sind.

9. Verfahren nach einem der Ansprüche 6 bis 8, wobei das Verfahren ferner umfasst:
Empfangen eines Downlink-Rahmens des Tunnelprotokolls des allgemeinen paketvermittelten Funkdiensts, GTP-U, der von der CU gesendet wird, durch die DU, wobei der Downlink-GTP-U-Rahmen Downlink-Dateninformationen der entfernten UE, eine erste Anzeige und eine Tunnelendpunktkennung eines GTP-U-Tunnels der Relais-UE umfasst, die Downlink-Dateninformationen ein Downlink-Datenpaket der entfernten UE und eine PDCP-Schicht sowie Anpassungsinformationen umfassen, die außerhalb des Downlink-Datenpakets verkapselt sind, wobei die Anpassungsinformationen verwendet werden, um anzuzeigen, dass das Downlink-Datenpaket das Downlink-Datenpaket der entfernten UE ist, und die erste Anzeige verwendet wird, um anzuzeigen, dass die Anpassungsinformationen außerhalb des Downlink-Datenpakets verkapselt sind; und
Senden der Downlink-Dateninformationen durch die DU verkapselt mit einer RLC-Schicht, einer MAC-Schicht und einer PHY-Schicht an die Relais-UE, wobei die PHY-Schicht, die MAC-Schicht oder die RLC-Schicht eine dritte Anzeige überträgt, und die dritte Anzeige verwendet wird, um anzuzeigen, dass die Anpassungsinformationen außerhalb des Downlink-Datenpakets verkapselt sind.

10. Verfahren nach einem der Ansprüche 6 bis 9, wobei das Verfahren ferner umfasst:
Empfangen von Uplink-Dateninformationen der entfernten UE, die von der Relais-UE gesendet werden, durch die DU, wobei die Uplink-Dateninformationen ein Uplink-Datenpaket der entfernten UE, eine PDCP-Schicht, Anpassungsinformationen und eine RLC-Schicht, eine MAC-Schicht und eine PHY-Schicht umfassen, die außerhalb des Uplink-Datenpakets verkapselt sind, wobei die PHY-Schicht, die MAC-Schicht oder die RLC-Schicht eine dritte Anzeige überträgt, die dritte Anzeige verwendet wird, um anzuzeigen, dass die Anpassungsinformationen außerhalb des Uplink-Datenpakets verkapselt sind, und die Anpassungsinformationen verwendet werden, um anzuzeigen, dass das Uplink-Datenpaket das Uplink-Datenpaket der entfernten UE ist; und
Senden eines Uplink-GTP-U-Rahmens durch die DU an die CU, wobei der Uplink-GTP-U-Rahmen eine erste Anzeige, eine Tunnelendpunktkennung eines GTP-U-Tunnels der Relais-UE, das Uplink-Datenpaket und die PDCP-Schicht sowie die Anpassungsinformationen umfasst, die außerhalb des Uplink-Datenpakets verkapselt sind, wobei die erste Anzeige verwendet wird, um anzuzeigen, dass die Anpassungsinformationen außerhalb des Uplink-Datenpakets verkapselt sind.

11. Kommunikationsvorrichtung, umfassend eine Einheit, die zum Durchführen des Verfahrens nach einem der Ansprüche 1 bis 10 konfiguriert ist.

12. Computerlesbares Speichermedium, das ein Programm speichert, wobei das Programm zum Implementieren des Kommunikationsverfahrens nach einem der Ansprüche 1 bis 10 konfiguriert ist.

13. Computerprogramm, umfassend ein Programm oder Anweisungen, wobei bei Ausführung des Programms oder der Anweisungen auf einem Computer das Verfahren nach einem der Ansprüche 1 bis 10 durchgeführt wird.

## Revendications

1. Procédé de communication, comprenant les étapes consistant à :
générer, par une unité centralisée (CU), un message de demande de modification de contexte d'UE, le message de demande de modification de contexte d'UE étant utilisé pour demander à une unité distribuée (DU) de modifier un contexte d'un équipement d'utilisateur (UE) relais, le message de demande de modification de contexte d'UE transportant un identifiant d'un UE distant, un identifiant de porteuse de l'UE relais et un identifiant d'un canal logique ayant une relation de correspondance avec l'identifiant de porteuse de l'UE relais, l'identifiant de porteuse de l'UE relais étant un identifiant d'une porteuse entre l'UE relais et la CU, et le canal logique étant un canal logique entre l'UE distant et l'UE relais ; et
envoyer, par la CU, le message de demande de modification de contexte d'UE à la DU, le procédé comprenant en outre l'étape consistant à :
envoyer, par la CU, un message de transfert d'informations de contrôle des ressources radio (RRC) en liaison descendante à la DU, le message de transfert d'informations RRC en liaison descendante comprenant des informations RRC en liaison descendante de l'UE distant, un identifiant de l'UE relais sur une interface CU-DU et une première indication, les informations RRC en liaison descendante comprenant un message RRC en liaison descendante de l'UE distant et une couche sur protocole de convergence de données par paquets (PDCP) et des informations d'adaptation qui sont encapsulées à l'extérieur du message RRC en liaison descendante, les informations d'adaptation étant utilisées pour indiquer que le message RRC en liaison descendante est le message RRC en liaison descendante de l'UE distant, et la première indication étant utilisée pour indiquer que les informations d'adaptation sont encapsulées à l'extérieur du message RRC en liaison descendante.

2. Procédé selon la revendication 1, dans lequel le message de demande de modification de contexte d'UE transporte en outre un identifiant de porteuse de l'UE distant ayant une relation de correspondance avec l'identifiant de porteuse de l'UE relais et l'identifiant du canal logique, et l'identifiant de porteuse de l'UE distant étant un identifiant d'une porteuse entre l'UE distant et la CU.

3. Procédé selon la revendication 1 ou 2, le procédé comprenant en outre l'étape consistant à :
recevoir, par la CU, un message de transfert d'informations RRC en liaison montante envoyé par la DU, le message de transfert d'informations RRC en liaison montante comprenant des informations RRC en liaison montante de l'UE distant, un identifiant de l'UE relais sur une interface CU-DU et une première indication, les informations RRC en liaison montante comprenant un message RRC en liaison montante de l'UE distant et une couche PDCP et des informations d'adaptation qui sont encapsulées à l'extérieur du message RRC en liaison montante, les informations d'adaptation étant utilisées pour indiquer que le message RRC en liaison montante est le message RRC en liaison montante de l'UE distant, et la première indication étant utilisée pour indiquer que les informations d'adaptation sont encapsulées à l'extérieur du message RRC en liaison montante.

4. Procédé selon l'une quelconque des revendications 1 à 3, le procédé comprenant en outre l'étape consistant à :
envoyer, par la CU, une trame sur protocole de tunnel de service général de radiocommunication en mode paquet (GTP-U) en liaison descendante à la DU, la trame GTP-U en liaison descendante comprenant des informations de données en liaison descendante de l'UE distant, une première indication et un identifiant de point d'extrémité de tunnel d'un tunnel GTP-U de l'UE relais, les informations de données en liaison descendante comprenant un paquet de données en liaison descendante de l'UE distant et une couche PDCP et des informations d'adaptation qui sont encapsulées à l'extérieur du paquet de données en liaison descendante, les informations d'adaptation étant utilisées pour indiquer que le paquet de données en liaison descendante est le paquet de données en liaison descendante de l'UE distant, et la première indication étant utilisée pour indiquer que les informations d'adaptation sont encapsulées à l'extérieur du paquet de données en liaison descendante.

5. Procédé selon l'une quelconque des revendications 1 à 4, le procédé comprenant en outre l'étape consistant à :
recevoir, par la CU, une trame GTP-U en liaison montante envoyée par la DU, la trame GTP-U en liaison montante comprenant des informations de données en liaison montante de l'UE distant, une première indication et un identifiant de point d'extrémité de tunnel d'un tunnel GTP-U de l'UE relais, les informations de données en liaison montante comprenant un paquet de données en liaison montante de l'UE distant et une couche PDCP et des informations d'adaptation qui sont encapsulées à l'extérieur du paquet de données en liaison montante, les informations d'adaptation étant utilisées pour indiquer que le paquet de données en liaison montante est le paquet de données en liaison montante de l'UE distant, et la première indication étant utilisée pour indiquer que les informations d'adaptation sont encapsulées à l'extérieur du paquet de données en liaison montante.

6. Procédé de communication, le procédé comprenant les étapes consistant à :
recevoir, par une unité distribuée (DU), un message de demande de modification de contexte d'UE envoyé par une unité centralisée (CU), le message de demande de modification de contexte d'UE transportant un identifiant d'un équipement d'utilisateur (UE) distant, un identifiant de porteuse de d'un UE relais et un identifiant d'un canal logique ayant une relation de correspondance avec l'identifiant de porteuse de l'UE relais, l'identifiant de porteuse de l'UE relais étant un identifiant d'une porteuse entre l'UE relais et la CU, et le canal logique étant un canal logique entre l'UE distant et l'UE relais ; et
générer, par la DU, des informations de configuration de contrôle des ressources radio (RRC) de l'UE relais sur la base de l'identifiant de l'UE distant, de l'identifiant de porteuse de l'UE relais et de l'identifiant du canal logique, les informations de configuration RRC comprenant une relation de correspondance parmi l'identifiant de l'UE distant, l'identifiant de porteuse de l'UE relais et l'identifiant du canal logique, le procédé comprenant en outre les étapes consistant à :
recevoir, par la DU, un message de transfert d'informations de contrôle des ressources radio (RRC) en liaison descendante envoyé par la CU, le message de transfert d'informations RRC en liaison descendante comprenant des informations RRC en liaison descendante de l'UE distant, un identifiant de l'UE relais sur une interface CU-DU et une première indication, les informations RRC en liaison descendante comprenant un message RRC en liaison descendante de l'UE distant et une couche sur protocole de convergence de données par paquets (PDCP) et des informations d'adaptation qui sont encapsulées à l'extérieur du message RRC en liaison descendante, les informations d'adaptation étant utilisées pour indiquer que le message RRC en liaison descendante est le message RRC en liaison descendante de l'UE distant, et la première indication étant utilisée pour indiquer que les informations d'adaptation sont encapsulées à l'extérieur du message RRC en liaison descendante ; et
envoyer, par la DU, les informations RRC en liaison descendante encapsulées avec une couche de contrôle des liaisons radio (RLC), une couche de contrôle d'accès au support (MAC) et une couche physique (PHY) à l'UE relais, la couche PHY, la couche MAC ou la couche RLC transportant une troisième indication, et la troisième indication étant utilisée pour indiquer que les informations d'adaptation sont encapsulées à l'extérieur du message RRC en liaison descendante.

7. Procédé selon la revendication 6, dans lequel le message de demande de modification de contexte d'UE transporte en outre un identifiant de porteuse de l'UE distant ayant une relation de correspondance avec l'identifiant de porteuse de l'UE relais et l'identifiant du canal logique, et l'identifiant de porteuse de l'UE distant étant un identifiant d'une porteuse entre l'UE distant et la CU ; et
une relation de correspondance entre l'identifiant de porteuse de l'UE relais et l'identifiant du canal logique est spécifiquement la relation de correspondance parmi l'identifiant de porteuse de l'UE relais, l'identifiant du canal logique et l'identifiant de porteuse de l'UE distant.

8. Procédé selon l'une quelconque des revendications 6 ou 7, le procédé comprenant en outre les étapes consistant à :
recevoir, par la DU, des informations RRC en liaison montante de l'UE distant envoyées par l'UE relais, les informations RRC en liaison montante comprenant un message RRC en liaison montante de l'UE distant, une couche PDCP, des informations d'adaptation et une couche RLC, une couche MAC et une couche PHY qui sont encapsulées à l'extérieur du message RRC en liaison montante, la couche PHY, la couche MAC ou la couche RLC transportant une troisième indication, la troisième indication étant utilisée pour indiquer que les informations d'adaptation sont encapsulées à l'extérieur du message RRC en liaison montante, et les informations d'adaptation étant utilisées pour indiquer que le message RRC en liaison montante est le message RRC en liaison montante de l'UE distant ; et
envoyer, par la DU, un message de transfert d'informations RRC en liaison montante à la CU, le message de transfert d'informations RRC en liaison montante comprenant un identifiant de l'UE relais sur une interface CU-DU, une première indication, le message RRC en liaison montante, la couche PDCP et les informations d'adaptation qui sont encapsulées à l'extérieur du message RRC en liaison montante.

9. Procédé selon l'une quelconque des revendications 6 à 8, le procédé comprenant en outre les étapes consistant à :
recevoir, par la DU, une trame sur protocole de tunnel de service général de radiocommunication en mode paquet (GTP-U) en liaison descendante envoyée par la CU, la trame GTP-U en liaison descendante comprenant des informations de données en liaison descendante de l'UE distant, une première indication et un identifiant de point d'extrémité de tunnel d'un tunnel GTP-U de l'UE relais, les informations de données en liaison descendante comprenant un paquet de données en liaison descendante de l'UE distant et une couche PDCP et des informations d'adaptation qui sont encapsulées à l'extérieur du paquet de données en liaison descendante, les informations d'adaptation étant utilisées pour indiquer que le paquet de données en liaison descendante est le paquet de données en liaison descendante de l'UE distant, et la première indication étant utilisée pour indiquer que les informations d'adaptation sont encapsulées à l'extérieur du paquet de données en liaison descendante ; et
envoyer, par la DU, les informations de données en liaison descendante encapsulées avec une couche RLC, une couche MAC et une couche PHY à l'UE relais, la couche PHY, la couche MAC ou la couche RLC transportant une troisième indication, et la troisième indication étant utilisée pour indiquer que les informations d'adaptation sont encapsulées à l'extérieur du paquet de données en liaison descendante.

10. Procédé selon l'une quelconque des revendications 6 à 9, le procédé comprenant en outre les étapes consistant à :
recevoir, par la DU, des informations de données en liaison montante de l'UE distant envoyées par l'UE relais, les informations de données en liaison montante comprenant un paquet de données en liaison montante de l'UE distant, une couche PDCP, des informations d'adaptation et une couche RLC, une couche MAC et une couche PHY qui sont encapsulées à l'extérieur du paquet de données en liaison montante, la couche PHY, la couche MAC ou la couche RLC transportant une troisième indication, la troisième indication étant utilisée pour indiquer que les informations d'adaptation sont encapsulées à l'extérieur du paquet de données en liaison montante, et les informations d'adaptation étant utilisées pour indiquer que le paquet de données en liaison montante est le paquet de données en liaison montante de l'UE distant ; et
envoyer, par la DU, une trame GTP-U en liaison montante à la CU, la trame GTP-U en liaison montante comprenant une première indication, un identifiant de point d'extrémité de tunnel d'un tunnel GTP-U de l'UE relais, le paquet de données en liaison montante et la couche PDCP et les informations d'adaptation qui sont encapsulées à l'extérieur du paquet de données en liaison montante, la première indication étant utilisée pour indiquer que les informations d'adaptation sont encapsulées à l'extérieur du paquet de données en liaison montante.

11. Appareil de communication, comprenant une unité configurée pour réaliser le procédé selon l'une quelconque des revendications 1 à 10.

12. Support de stockage lisible par ordinateur stockant un programme, le programme étant configuré pour mettre en oeuvre le procédé de communication selon l'une quelconque des revendications 1 à 10.

13. Programme informatique, comprenant un programme ou des instructions, qui, lorsque le programme ou les instructions sont exécutés sur un ordinateur, provoquent la réalisation du procédé selon l'une quelconque des revendications 1 à 10.
